# EUROPEAN PATENT SPECIFICATION

(11) **EP 2 874 754 B1**
(45) Date of publication and mention of the grant of the patent: **18.01.2023**
(21) Application number: 13820681.8
(22) Date of filing: 18.07.2013
(51) Int. Cl.: B04B 13/00, B04B 9/10, B04B 9/14, B04B 5/04, B04B 15/02, G01D 5/14, G01D 5/347, G01P 3/488

(54) **HIGH SPEED, COMPACT CENTRIFUGE FOR USE WITH SMALL SAMPLE VOLUMES**
SCHNELLE, KOMPAKTE ZENTRIFUGE ZUR VERWENDUNG MIT KLEINEN PROBENVOLUMINA
CENTRIFUGEUSE COMPACTE À GRANDE VITESSE DESTINÉE À ÊTRE UTILISÉE AVEC DE PETITS VOLUMES D'ÉCHANTILLON

(30) Priority: 18.07.2012 US 201261673245 P; 25.07.2012 US 201261675758 P; 27.09.2012 US 201261706753 P
(43) Date of publication of application: 27.05.2015
(73) Proprietor: Labrador Diagnostics LLC, Wilmington, Delaware 19801 (US)
(72) Inventor: HOLMES, Elizabeth, A., Palo Alto, CA 94304 (US); YOUNG, Daniel, Palo Alto, CA 94304 (US); SMITH, Timothy, Palo Alto, CA 94304 (US); RIDEL, Scott, Palo Alto, CA 94304 (US); FRANKOVICH, John Kent, Palo Alto, CA 94304 (US); SIEGEL, Michael, Palo Alto, CA 94304 (US)
(74) Representative: Avidity IP
(86) International application number: PCT/US2013/051170
(87) International publication number: WO 2014/015199

(56) References cited:
- EP-A2- 1 129 783
- EP-A2- 1 571 426
- WO-A1-01/04600
- DE-A1- 19 813 881
- JP-A- H1 157 560
- RU-C1- 2 148 438
- SU-A1- 598 649
- SU-A1- 1 722 603
- US-A- 3 600 900
- US-A1- 2002 074 882
- US-A1- 2006 013 733
- US-A1- 2009 276 180
- US-A1- 2012 071 313
- US-B1- 6 361 486

## Description

### BACKGROUND

Traditional centrifuges are excessively large and inefficient for handling centrifugation of small volumes of liquid samples. They also fail to include certain features that would be desired when processing small sample volumes.

### SUMMARY

US 2009/0276180 discloses a measuring device for determining the position and/or angle of rotation of a body that carries out a translatory and/or rotary motion, notably a shaft encoder to measure rotation of a shaft about an axis of rotation.

EP 1571426 is concerned with a displacement encoder, in particular a rotation number data-detection type encoder in which costs and power consumption are reduced by reducing the number of expensive magnetic detection elements.

DE 19813881 is concerned with a device and method for determining an unbalance of an offset in rotation by a drive means centrifugal rotor.

According to this invention, there is provided, in one aspect, a compact high speed centrifuge as defined in claim 1. Preferred and optional features of the centrifuge are to be found amongst the sub-claims 2-11.

In a second aspect, the invention further provides a method as defined in claim 12. Preferred and optional features of the method are to be found amongst the sub-claims 13-15.

It should be understood that embodiments in this disclosure may be adapted to have one or more of the features described herein. Embodiments of the invention must have, or use, first and second air bearings as claimed herein.

In one non-limiting example, an automated system is provided for separating one or more components in a biological fluid. The system may comprise of: (a) a centrifuge comprising one or more buckets configured to receive a container to effect said separating of one or more components in a fluid sample; and (b) the container, wherein the container includes one or more shaped features that are complementary to a shaped feature of the bucket.

It should be understood that embodiments herein may be adapted to have one or more of the following features. In one non-limiting example, the system may have one or more buckets that is a swinging bucket that is at or near a vertical position when the centrifuge is at rest and that is at or near a horizontal position when the centrifuge is spinning. Optionally, the system may have a plurality of swinging buckets that are spaced radially symmetrically on the centrifuge. Optionally, the fluid sample is a biological fluid. Optionally, the biological fluid is blood. Optionally, the container is configured to contain 100 uL or less of sample fluid. Optionally, the container is configured to contain 50 uL or less of sample fluid. Optionally, the container is configured to contain 25 uL or less of sample fluid. Optionally, the container is closed on one end and open at an opposing end. Optionally, the container is a centrifugation vessel. Optionally, the centrifugation vessel has a rounded end with one or more interior nubs. Optionally, the system includes an extraction tip with one or more shaped features that are complementary to a shaped feature of the centrifugation vessel, and that are configured to fit within the centrifugation vessel. Optionally, the shaped feature of the bucket includes one or more shelves upon which a protruding portion of the container is configured to rest. Optionally, the bucket is configured to be capable of accepting a plurality of containers having different configurations, and wherein the shaped feature of the bucket includes a plurality of shelves, wherein a first container having a first configuration is configured to rest upon a first shelf, and a second container having a second configuration is configured to rest upon a second shelf.

In yet another embodiment described herein, a compact high speed centrifuge is provided comprising a centrifuge body; a motor for rotating the centrifuge body; and a detector integrated with the motor and configured to determine at least a rotational position of a rotating portion of the motor, wherein the detector uses at least two different types of encoder information to determine the rotational position.

It should be understood that embodiments herein may be adapted to have one or more of the following features. In one non-limiting example, the detector uses at least optical encoder and Hall-effect techniques to determine rotational position. Optionally, the detector uses at least optical encoder and Hall-effect techniques to determine at least rotational position and rotational velocity. Optionally, the detector has a first surface directed towards detecting one type of encoder information and a second surface directed towards detecting another type of encoder information. Optionally, the first surface and the second surface are oriented in different directions. Optionally, the first surface and the second surface are oriented in the same direction. Optionally, the motor includes a plurality of detectors for determining rotational position. Optionally, the motor includes a first encoder disc providing the first type of encoder information and a second encoder disc providing the second type of encoder information. Optionally, the motor includes a first encoder disc providing optical encoder information and a second encoder disc providing magnetic encoder information. Optionally, the motor includes an encoder disc providing the first type of encoder information and the second type of encoder information. Optionally, the motor includes an encoder disc providing both optical encoder information and magnetic encoder information. It should be understood that although the motor with integrated encoder components is described in the context of a centrifuge, the motor may also be adapted for use in other scenarios that desire to have position and/or velocity detector features integrated into the motor.

In yet another embodiment described herein, a method is provided comprising: providing a motor; integrating a first type of encoder into the motor; integrating a second type of encoder into the motor; determining rotational position of a rotating portion of the motor using the first type of encoder, and determining rotational velocity of the rotating portion of the motor using the second type of encoder.

It should be understood that embodiments herein may be adapted to have one or more of the following features. In one non-limiting example, the first type of encoder provides optical encoder information. Optionally, the first type of encoder provides magnetic encoder information. Optionally, the first type of encoder provides Hall-effect encoder information. Optionally, the first type of encoder and the second type of encoder provide different types of encoder information.

In another embodiment described herein, a compact high speed centrifuge for use with sample containers is provided. The centrifuge may comprise a first portion comprising a thermally insulating material; a second portion comprising a thermally conductive material; wherein containers are arranged such that the containers are located in areas with the thermally insulating material; wherein the thermally conductive material is configured to channel heat in a direction leading away from the containers.

In another embodiment described herein, a compact high speed centrifuge for use with sample containers is provided. The centrifuge may comprise a centrifuge body; a drive mechanism for rotating the centrifuge body; an active cooling unit for minimizing heat transfer to the sample; wherein containers are arranged such that the containers are located in areas with reduced thermal exposure; the active cooling unit configured to cool the drive mechanism; wherein a stator is located coaxially within a rotor of a motor in the drive mechanism.

In another embodiment described herein, a compact high speed centrifuge for use with sample containers is provided. The centrifuge may comprise a centrifuge body; a drive mechanism for rotating the centrifuge body; and a position detector for use in determining rotational position of the centrifuge body.

In another embodiment described herein, a compact high speed centrifuge for use with sample containers is provided. The centrifuge may comprise a centrifuge body; a drive mechanism for rotating the centrifuge body; and autobalancing weights coupled to the centrifuge body, wherein such weights are configured to move under centrifugal force to a location to minimize off-balance rotation of the centrifuge body with uneven amounts of load in sample holders of the centrifuge.

In another embodiment described herein, a compact high speed centrifuge for use with sample containers is provided. The centrifuge may comprise a centrifuge body; a drive mechanism for rotating the centrifuge body; and at least one air bearing configured to operably support the centrifuge.

In another embodiment described herein, a compact high speed centrifuge for use with sample containers is provided. The centrifuge may comprise a centrifuge housing; a centrifuge body; a drive mechanism for rotating the centrifuge body; and at least one air bearing configured to operably support the centrifuge, wherein at least a portion of the air bearing is a part of the centrifuge housing.

In another embodiment described herein, a compact high speed centrifuge for use with sample containers is provided. The centrifuge may comprise a centrifuge housing; a centrifuge body; a drive mechanism for rotating the centrifuge body; a force detector configured to detect rate changes in force outside a range of pre-determined force conditions.

It should be understood that embodiments herein may be adapted to have one or more of the following features. In one non-limiting example, the centrifuge vessel holders pivot inward toward a centre axis of the centrifuge rotor under centrifugal force. Optionally, the centrifuge vessel holders form a flush surface with rotor body to minimize aerodynamic drag. Optionally, the centrifuge vessel holder is configured to retract downward under centrifugal force. Optionally, electrical connections are not disrupted by centrifuge body cooling elements, even if such elements are in motion during centrifuge operation.

In another embodiment described herein, a compact high speed centrifuge for use with sample containers is provided. The centrifuge may comprise a centrifuge body; a drive mechanism for rotating the centrifuge body, wherein the centrifuge body extends downward to cover at least a portion of the drive mechanism; wherein the drive mechanism comprises a stator and a rotor; wherein the rotor is concentric about the stator.

In another embodiment described herein, a compact high speed centrifuge for use with sample containers is provided. The centrifuge may comprise a centrifuge body; a drive mechanism for rotating the centrifuge body, wherein the centrifuge body extends downward to cover at least a portion of the drive mechanism; wherein the drive mechanism comprises a stator and a rotor; wherein the stator is concentric about the rotor.

In another embodiment described herein, a compact high speed centrifuge for use with sample containers is provided. The centrifuge may comprise a centrifuge body; a drive mechanism for rotating the centrifuge body; one or more swing holders on the centrifuge body for containing a centrifuge vessel; wherein a maximum dimension of the swing holders or the sample containers does not exceed about 10mm.

In another embodiment described herein, a compact high speed centrifuge for use with sample containers is provided. The centrifuge may comprise a centrifuge body; a drive mechanism for rotating the centrifuge body; one or more swing holders on the centrifuge body for containing a centrifuge vessel; wherein the swing holders, during centrifuge operation, move from a first orientation to a second orientation more horizontal than the first orientation.

In another embodiment described herein, a compact high speed centrifuge for use with sample containers is provided. The centrifuge may comprise a centrifuge body; a drive mechanism for rotating the centrifuge body; one or more swing holders on the centrifuge body for containing a centrifuge vessel; wherein width of the sample container is greater than a length of the sample container.

In another embodiment described herein, a compact high speed centrifuge for use with sample containers is provided. The centrifuge may comprise a centrifuge body and a drive mechanism for rotating the centrifuge body.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. To qualify as an embodiment according to the invention, there must be present first and second air bearings as claimed herein.

### BRIEF DESCRIPTION OF THE DRAWINGS

Figures 1 to 3 show various views of embodiments of a centrifuge described herein.
Figures 4 to 5 show various views of embodiments of a centrifuge described herein.
Figures 6 to 8 show various views of embodiments of vessel holders as described herein.
Figures 9 to 12 show various embodiments of a centrifuge described herein.
Figures 13 to 16 show various views of embodiments of centrifuges with thermal control features as described herein.
Figures 17A to 17G show various embodiments of devices and methods for position and/or velocity control as described herein.
Figures 18A to 18C show various embodiments of self-balancing features described herein.
Figures 19 to 21 show various embodiments of devices and methods as described herein,
Figure 22 shows a schematic of one embodiment of an integrated system having sample handling, pre-processing, and analysis components.

### DESCRIPTION OF THE SPECIFIC EMBODIMENTS

It is to be understood that both the foregoing general description and the following detailed description are exemplary and explanatory only and are not restrictive of the invention, as claimed. It may be noted that, as used in the specification and the appended claims, the singular forms "a", "an" and "the" include plural referents unless the context clearly dictates otherwise. Thus, for example, reference to "a material" may include mixtures of materials, reference to "a compound" may include multiple compounds, and the like.

In this specification and in the claims which follow, reference will be made to a number of terms which shall be defined to have the following meanings:
"Optional" or "optionally" means that the subsequently described circumstance may or may not occur, so that the description includes instances where the circumstance occurs and instances where it does not. For example, if a device optionally contains a feature for a sample collection well, this means that the sample collection well may or may not be present, and, thus, the description includes both structures wherein a device possesses the sample collection well and structures wherein sample collection well is not present.

Arrangements as subsequently described that include first and second air bearings as claimed are embraced by the scope of the invention. Arrangements that do not are excluded from the scope of the invention, but are nonetheless provided for technical information.

### Centrifuges

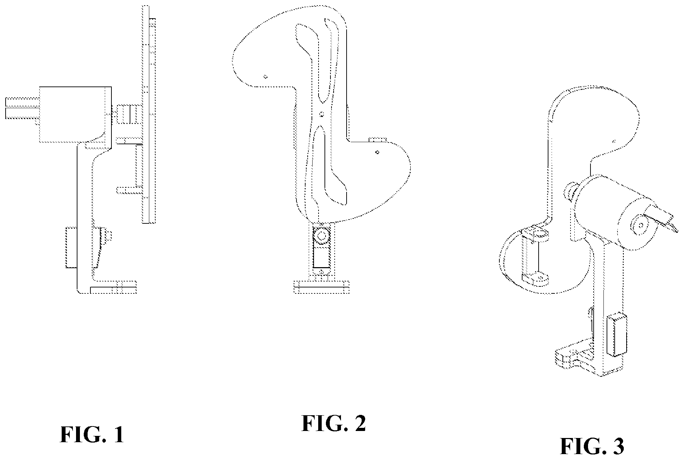

Figure 1, Figure 2, and Figure 3 show scale perspectives of a centrifuge (Figure 1 - side view, Figure 2 - front face view, Figure 3 - rear view) that can be integrated into the system. The centrifuge may contain an electric motor capable of turning the rotor at 15,000 rpm. One type of centrifuge rotor is shaped somewhat like a fan blade is mounted on the motor spindle in a vertical plane. Affixed to the rotor is an element which holds the sample holding elements (tip) and provides a ledge or shelf on which the end of the tip distal to the motor axis rests and which provides support during the centrifugation so that the sample cannot escape. The tip may be further supported at its proximal end by a mechanical stop in the rotor. This can be provided so that the force generated during centrifugation does not cause the tip to cut through the soft vinyl cap. The tip can be inserted and removed by standard pick and place mechanisms but preferably by a pipette. The rotor is a single piece of acrylic (or other material) shaped to minimize vibration and noise during operation of the centrifuge. The rotor is (optionally) shaped so that when it is oriented in particular angles to the vertical, other movable components in the instrument can move past the centrifuge. The sample holding elements are centrifugally balanced by counter masses on the opposite side of the rotor such that the center of rotational inertia is axial relative to the motor. The centrifuge motor may provide positional data to a computer which can then control the rest position of the rotor (typically vertical before and after centrifugation).

To minimize centrifugation time (without generating too much mechanical stress during centrifugation) according to published standards (DIN 58933-1; for the U.S. the CLSI standard H07-A3 "Procedure for Determining Packed Cell Volume by the Microhematocrit Method"; Approved Standard - Third Edition) convenient dimensions for the rotor are in the range of about 5 - 10 cm spinning at about10 - 20 thousand rpm giving a time to pack the red cells of about 5 min.

In some embodiments, a centrifuge may be a horizontally oriented centrifuge with a swinging bucket design. In some preferable embodiments, the axis of rotation of the centrifuge is vertical. In alternate embodiments, the axis of rotation can be horizontal or at any angle. The centrifuge may be capable of simultaneously spinning two or more vessels and may be designed to be fully integrated into an automated system employing computer-controlled pipettes. In some embodiments, the vessels may be close-bottomed. The swinging bucket design may permit the centrifugation vessels to be passively oriented in a vertical position when stopped, and spin out to a fixed angle when spinning. In some embodiments, the swinging buckets may permit the centrifugation vessels to spin out to a horizontal orientation. Alternatively they may spin out to any angle between a vertical and horizontal position (e.g., about 15, 30, 45, 60, or 75 degrees from vertical. The centrifuge with swinging bucket design may meet the positional accuracy and repeatability requirements of a robotic system a number of positioning systems are employed.

A computer-based control system may use position information from an optical encoder in order to spin the rotor at controlled slow speeds. Because an appropriate motor could be designed for high-speed performance, accurate static positions need not be held using position feedback alone. In some embodiments, a cam in combination with a solenoid-actuated lever may be employed to achieve very accurate and stable stopping at a fixed number of positions. Using a separate control system and feedback from Hall-Effect sensors built into the motor, the velocity of the rotor can be very accurately controlled at high speeds.

Because a number of sensitive instruments must function simultaneously within the assay instrument system, the design of the centrifuge preferably minimizes or reduces vibration. The rotor may be aerodynamically designed with a smooth exterior - fully enclosing the buckets when they are in their horizontal position. Also, vibration dampening can be employed in multiple locations in the design of the case. It should be understood that any of the embodiments in Figures 1-3 may be configured to have any of the other features described in this disclosure.

### Rotor

A centrifuge rotor can be a component of the system which may hold and spin the centrifugation vessel(s). The axis of rotation can be vertical, and thus the rotor itself can be positioned horizontally. However, in alternate embodiments, different axes of rotation and rotor positions can be employed. There are two components known as buckets positioned symmetrically on either side of the rotor which hold the centrifugation vessels. Alternative configurations are possible in which buckets are oriented with radial symmetry, for example three buckets oriented at 120 degrees. Any number of buckets may be provided, including but not limited to 1, 2, 3, 4, 5, 6, 7, 8, or more buckets. The buckets can be evenly spaced from one another. For example, if n buckets are provided where n is a whole number, then the buckets may be spaced about 360/n degrees apart from one another. In other embodiments, the buckets need not be spaced evenly around one another or with radial symmetry.

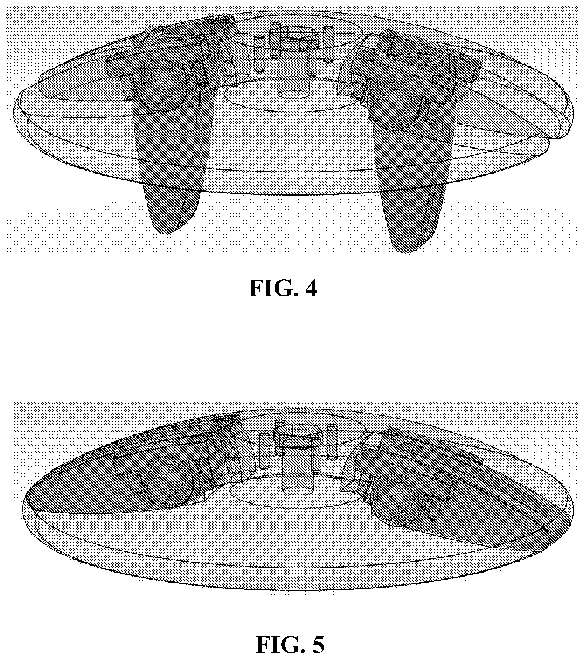

When the rotor is stationary, these buckets, influenced by gravity, may passively fall such as to position the vessels vertically and to make them accessible to the pipette. Figure 4 shows an example of a rotor at rest with buckets vertical. In some embodiments, the buckets may passively fall to a predetermined angle that may or may not be vertical. When the rotor spins, the buckets are forced into a nearly horizontal position or to a predetermined angle by centrifugal forces. Figure 5 shows an example of a rotor at a speed with buckets at a small angle to horizontal. There can be physical hard stops for both the vertical and horizontal positions acting to enforce their accuracy and positional repeatability.

The rotor may be aerodynamically designed with a disk shape, and as few physical features as possible in order to minimize vibration caused by air turbulence. To achieve this, the outer geometry of the bucket may exactly match that of the rotor such that when the rotor is spinning and the bucket can be forced horizontal the bucket and rotor can be perfectly aligned.

To facilitate plasma extraction, the rotor may be angled down toward the ground relative to the horizon. Because the angle of the bucket can be matched to that of the rotor, this may enforce a fixed spinning angle for the bucket. The resulting pellet from such a configuration could be angled relative to the vessel when placed upright. A narrow extraction tip may be used to aspirate plasma from the top of the centrifugation vessel. By placing the extraction tip near the bottom of the slope created by the angle pellet, the final volume of plasma can be more efficiently extracted without disturbing the sensitive buffy coat.

A variety of tubes designs can be accommodated in the buckets of the device. In some embodiments, the various tube designs may be closed ended. Some are shaped like conventional centrifuge tubes with conical bottoms. Other tube designs may be cylindrical. Tubes with a low ratio of height to cross-sectional area may be favored for cell processing. Tubes with a large ratio (>10:1) may be suitable for accurate measurement of hematocrit and other imaging requirements. However, any height to cross-sectional area ratio may be employed. The buckets can be made of any of several plastics (polystyrene, polypropylene), or any other material discussed elsewhere herein. Buckets have capacities ranging from a few microliters to about a milliliter. The tubes may be inserted into and removed from the centrifuge using a "pick and place" mechanism.

### Control System

Due to the spinning and positioning requirements of the centrifuge device, a dual control system approach may be used. To index the rotor to specific rotational orientations, a position based control system may be implemented. In some embodiments, the control system may employ a PID (Proportional Integral Derivative) control system. Other feedback control systems known in the art can be employed. Positional feedback for the position controller may be provided by a high-resolution optical encoder. For operating the centrifuge at low to high speeds, a velocity controller may be implemented, while employing a PID control system tuned for velocity control. Rotational rate feedback for the velocity controller may be provided by a set of simple Hall-Effect sensors placed on the motor shaft. Each sensor may generate a square wave at one cycle per motor shaft rotation.

### Stopping Mechanism

To consistently and firmly position the rotor in a particular position, a physical stopping mechanism may be employed in some embodiments herein. In one embodiment, the stopping mechanism may use a cam, coupled to the rotor, along with a solenoid-actuated lever. The cam may be shaped like a circular disk with a number of "C" shaped notches machined around the perimeter. To position the centrifuge rotor, its rotational velocity may first be lowered to, at most, 30RPM. In other embodiments, the rotational velocity may be lowered to any other amount, including but not limited to about 5 rpm, 10 rpm, 15 rpm, 20 rpm, 25 rpm, 35 rpm, 40 rpm, or 50 rpm. Once the speed is sufficiently slow, the lever may be actuated. At the end of the lever is a cam follower which may glide along the perimeter of the cam with minimal friction. Once the cam follower reaches the center of a particular notch in the cam, the force of the solenoid-actuated lever can overcome that of the motor and the rotor may be brought to a halt. At that point the motor may be electronically braked, and, in combination with the stopping mechanism a rotational position can be very accurately and firmly held indefinitely.

### Centrifuge bucket(s)

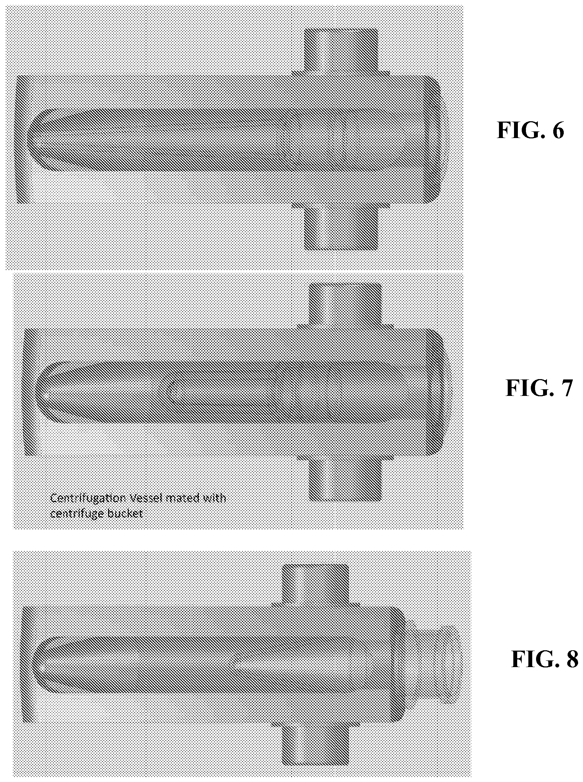

The centrifuge swing-out buckets may be configured to accommodate different type of centrifuge tubes. In preferable embodiments, the various tube types may have a collar or flange at their upper (open) end. This collar or flange feature may rests on the upper end of the bucket and support the tube during centrifugation. As shown in Figures 6, 7, and 8, conical and cylindrical tubes of various lengths and volumes can be accommodated. Figures 6, 7, and 8 provide examples of buckets and other bucket designs may be employed. For example, Figure 6 shows an example of a bucket configuration. The bucket may have side portions that mate with the centrifuge and allow the bucket to swing freely. The bucket may have a closed bottom and an opening at the top. Figure 7 shows an example of a centrifugation vessel mated with the bucket. As previously mentioned, the bucket may be shaped to accept various configurations of centrifugation vessels. The centrifugation vessel may have one or more protruding member that may rest upon the bucket. The centrifugation vessel may be shaped with one or more features that may mate with the centrifugation bucket. The feature may be a shaped feature of the vessel or one or more protrusion. Figure 8 shows an example of another centrifugation vessel that can be mated with the bucket. As previously described, the bucket can have one or more shaped feature that may allow different configurations of centrifugation vessels to mate with the bucket. It should be understood that any of the embodiments the centrifuge in Figures 4-8 may be configured to have any of the other features described in this disclosure.

### Centrifuge tubes and sample extraction techniques

The centrifuge tube and extraction tip may be provided individually and can be mated together for extraction of material following centrifugation. The centrifugation tube and extraction tip may be designed to deal with complex processes in an automated system. Any dimensions are provided by way of example only, and other dimensions of the same or differing proportions may be utilized.

The system can enable one or more of the following:
1. Rapid processing of small blood samples (typically 5 - 50 uL)
2. Accurate and precise measurement of hematocrit
3. Efficient removal of plasma
4. Efficient re-suspension of formed elements (red and white blood cells)
5. Concentration of white cells (following labeling with fluorescent antibodies and fixation plus lysis of red cells)
6. Optical confirmation of red cell lysis and recovery of white cells

### Centrifugation Vessel and Extraction Tip Overview

A custom vessel and tip may be used for the operation of the centrifuge in order to satisfy the variety of constraints placed on the system. The centrifugation vessel may be a closed bottom tube designed to be spun in the centrifuge. In some embodiments, the centrifugation vessel may be the vessel illustrated in Figure 116 or may have one or more features illustrated in Figure 116. It may have a number of unique features enabling the wide range of required functionality including hematocrit measurement, RBC lysing, pellet re-suspension and efficient plasma extraction. The extraction tip may be designed to be inserted into the centrifugation vessel for precise fluid extraction, and pellet re-suspension. In some embodiments, the extraction tip may be the tip illustrated in Figure 117 or may have one or more features illustrated in Figure 117. Exemplary specifications for extraction tips are discussed herein and may also be found in U.S. Application Ser. Nos. 13/355,458 (US 2012/0309636) and 13/244,947 (US 10012664).

### Centrifugation Vessel

In one embodiment, the centrifugation vessel may be designed to handle two separate usage scenarios, each associated with a different anti-coagulant and whole blood volume.

A first usage scenario may require that 40uL of whole blood with Heparin be pelleted, the maximum volume of plasma be recovered, and the hematocrit measured using computer vision. In the case of 60% hematocrit or below the volume of plasma required or preferable may be about 40uL^{∗}40%=16uL.

In some embodiments, it will not be possible to recover 100% of the plasma because the buffy coat must not be disturbed, thus a minimum distance must be maintained between the bottom of the tip and the top of the pellet. This minimum distance can be determined experimentally but the volume (V) sacrificed as a function of the required safety distance (d) can be estimated using: V(d) = d^{∗}π1.25mm2. For example, for a required safety distance of 0.25 mm, the sacrificed volume could be 1.23uL for the 60% hematocrit case. This volume can be decreased by decreasing the internal radius of the hematocrit portion of the centrifugation vessel. However, because in some embodiments, that narrow portion must fully accommodate the outer radius of the extraction tip which can be no smaller than 1.5 mm, the existing dimensions of the centrifugation vessel may be close to the minimum.

Along with plasma extraction, in some embodiments it may also be required that the hematocrit be measured using computer vision. In order to facilitate this process the total height for a given volume of hematocrit may be maximized by minimizing the internal diameter of the narrow portion of the vessel. By maximizing the height, the relationship between changes in hematocrit volume and physical change in column height may be optimized, thus increasing the number of pixels that can be used for the measurement. The height of the narrow portion of the vessel may also be long enough to accommodate the worst-case scenario of 80% hematocrit while still leaving a small portion of plasma at the top of the column to allow for efficient extraction. Thus, 40uL^{∗}80% = 32uL may be the required volume capacity for accurate measurement of the hematocrit. The volume of the narrow portion of the tip as designed may be about 35.3uL which may allow for some volume of plasma to remain, even in the worst case.

A second usage scenario is much more involved, and may require one, more, or all of the following:
- whole blood pelleted
- plasma extracted
- pellet re-suspended in lysing buffer and stain
- remaining white blood cells (WBCs) pelleted
- supernatant removed
- WBCs re-suspended
- WBC suspension fully extracted

In order to fully re-suspend a packed pellet, experiments have shown one can physically disturb the pellet with a tip capable of completely reaching the bottom of the vessel containing the pellet. A preferable geometry of the bottom of the vessel using for re-suspension seems to be a hemispherical shape similar to standard commercial PCR tubes. In other embodiments, other vessel bottom shapes may be used. The centrifugation vessel, along with the extraction tip, may be designed to facilitate the re-suspension process by adhering to these geometrical requirements while also allowing the extraction tip to physically contact the bottom.

During manual re-suspension experiments it was noticed that physical contact between the bottom of the vessel, and the bottom of the tip may create a seal that prohibits fluid movement. A delicate spacing may be used in order to both fully disturb the pellet, while allowing fluid flow. In order to facilitate this process in a robotic system, a physical feature may be added to the bottom of the centrifugation vessel. In some embodiments, this feature may comprise four small hemispherical nubs placed around the perimeter of the bottom portion of the vessel. When the extraction tip is fully inserted into the vessel and allowed to make physical contact, the end of the tip may rest on the nubs, and fluid is allowed to freely flow between the nubs. This may result in a small amount of volume (~0.25uL) lost in the gaps.

During the lysing process, in some implementations, the maximum expected fluid volume is 60uL, which, along with 25uL displaced by the extraction tip may demand a total volume capacity of 85uL. A design with a current maximum volume of 100uL may exceed this requirement. Other aspects of the second usage scenario require similar or already discussed tip characteristics.

The upper geometry of the centrifugation vessel may be designed to mate with a pipette nozzle. Any pipette nozzle described elsewhere herein or known in the art may be used. The external geometry of the upper portion of the vessel may exactly match that of a reaction tip which both the current nozzle and cartridge may be designed around. In some embodiments, a small ridge may circumscribe the internal surface of the upper portion. This ridge may be a visual marker of the maximum fluid height, meant to facilitate automatic error detection using computer vision system.

In some embodiments, the distance from the bottom of the fully mated nozzle to the top of the maximum fluid line is 2.5mm. This distance is 1.5mm less than the 4mm recommended distance adhered to by the extraction tip. This decreased distance may be driven by the need to minimize the length of the extraction tip while adhering to minimum volume requirements. The justification for this decreased distance stems from the particular use of the vessel. Because, in some implementations, fluid may be exchanged with the vessel from the top only, the maximum fluid it will ever have while mated with the nozzle is the maximum amount of whole blood expected at any given time (40uL). The height of this fluid may be well below the bottom of the nozzle. Another concern is that at other times the volume of fluid in the vessel may be much greater than this and wet the walls of up to the height of the nozzle. In some embodiments, it will be up to those using the vessel to ensure that the meniscus of any fluids contained within the vessel do not exceed the max fluid height, even if the total volume is less than the maximum specified. In other embodiments, other features may be provided to keep the fluid contained within the vessel.

Any dimensions, sizes, volumes, or distances provided herein are provided by way of example only. Any other dimension, size, volume or distance may be utilized which may or may not be proportional to the amounts mentioned herein.

The centrifugation vessel can be subjected to a number of forces during the process of exchanging fluids and rapidly inserting and removing tips. If the vessel is not constrained, it is possible that these forces will be strong enough to lift or otherwise dislodge the vessel from the centrifuge bucket. In order to prevent movement, the vessel should be secured in some way. To accomplish this, a small ring circumscribing the bottom exterior of the vessel was added. This ring can easily be mated with a compliant mechanical feature on the bucket. As long as the retaining force of the nub is greater than the forces experienced during fluid manipulations, but less than the friction force when mated with the nozzle then the problem is solved.

### Extraction Tip

The Extraction Tip may be designed to interface with the centrifugation vessel, efficiently extracting plasma, and re-suspending pelleted cells. Where desired, its total length (e.g., 34.5 mm) may exactly match that of another blood tip including but not limited to those described in US. Serial No. 12/244,723 (US 8088593) but may be long enough to physically touch the bottom of the centrifugation vessel. The ability to touch the bottom of the vessel may be required in some embodiments, both for the re-suspension process, and for complete recovery of the white cell suspension.

The required volume of the extraction tip may be determined by the maximum volume it is expected to aspirate from the centrifugation vessel at any given time. In some embodiments, this volume may be approximately 60uL, which may be less than the maximum capacity of the tip which is 85uL. In some embodiments, a tip of greater volume than required volume may be provided. As with the centrifugation vessel, an internal feature circumscribing the interior of the upper portion of the tip may be used to mark the height of this maximum volume. The distance between the maximum volume line and the top of the mated nozzle may be 4.5mm, which may be considered a safe distance to prevent nozzle contamination. Any sufficient distance to prevent nozzle contamination may be used.

The centrifuge may be used to sediment precipitated LDL-cholesterol. Imaging may be used to verify that the supernatant is clear, indicating complete removal of the precipitate.

In one example, plasma may be diluted (e.g., 1:10) into a mixture of dextran sulfate (25mg/dL) and magnesium sulfate (100mM), and may be then incubated for 1 minute to precipitate LDL-cholesterol. The reaction product may be aspirated into the tube of the centrifuge, capped then and spun at 3000 rpm for three minutes. Figures 119, 120, and 121 are images that were taken of the original reaction mixture prior to centrifugation (showing the white precipitate), following centrifugation (showing a clear supernatant) and of the LDL-cholesterol pellet (after removal of the cap), respectively.

Other examples of centrifuges that can be employed in the present invention are described in U.S. Patent Nos. 5,693,233, 5,578,269, 6,599,476 and U.S. Patent Publication Nos. 2004/0230400, 2009/0305392, and 2010/0047790.

### Example protocols

Many variations of protocol may be used for centrifugation and processing. For example, a typical protocol for use of the centrifuge to process and concentrate white cells for cytometry may include one or more of the following steps. The steps below may be provided in varying orders or other steps may be substituted for any of the steps below:
1. Receive 10 uL blood anti-coagulated with an anti-coagulant (pipette injects the blood into the bottom of the centrifuge bucket)
2. Sediment the red and white cells by centrifugation (< 5 min x 10,000 g).
3. Measure hematocrit by imaging
4. Remove plasma slowly by aspiration into the pipette (4 uL corresponding to the worst case scenario [60 % hematocrit]) without disturbing the cell pellet.
5. Re-suspend the pellet after adding 20 uL of an appropriate cocktail of up to five fluorescently labeled antibodies dissolved in buffered saline.
6. Incubate for 15 minutes at 37C.
7. Prepare lysing/fixative reagent by mixing red cell lysing solution (ammonium chloride/potassium bicarbonate) with white cell fixative reagent (formaldehyde).
8. Add 30 uL lysing/fixative reagent (total reaction volume about 60 uL).
9. Incubate 15 minutes at 37C
10. Sediment the white cells by centrifugation (10,000 g).
11. Remove the supernatant hemolysate.
12. Re-suspend the white cells by adding buffer (isotonic buffered saline).
13. Measure the volume accurately.
14. Deliver sample to cytometry.

The steps may include receiving a sample. The sample may be a bodily fluid, such as blood, or any other sample described elsewhere herein. The sample may be a small volume, such as any of the volume measurements described elsewhere herein. In some instances, the sample may have an anti-coagulant.

A separation step may occur. For example, a density-based separation may occur. Such separation may occur via centrifugation, magnetic separation, lysis, or any other separation technique known in the art. In some embodiments, the sample may be blood, and the red and white blood cells may be separated.

A measurement may be made. In some instances, the measurement may be made via imaging, or any other detection mechanism described elsewhere herein. For example, the hematocrit of a separated blood sample may be made by imaging. Imaging may occur via a digital camera or any other image capture device described herein.

One or more component of a sample may be removed. For example, if the sample is separated into solid and liquid components, the liquid component may be moved. The plasma of a blood sample may be removed. In some instances, the liquid component, such as plasma, may be removed via a pipette. The liquid component may be removed without disturbing the solid component. The imaging may aid in the removal of the liquid component, or any other selected component of the sample. For example, the imaging may be used to determine where the plasma is located and may aid in the placement of the pipette to remove the plasma.

In some embodiments, a reagent or other material may be added to the sample. For example, the solid portion of the sample may be resuspended. A material may be added with a label. One or more incubation step may occur. In some instances, a lysing and/or fixative reagent may be added. Additional separation and/or resuspending steps may occur. As needed, dilution and/or concentration steps may occur.

The volume of the sample may be measured. In some instances, the volume of the sample may be measured in a precise and/or accurate fashion. The volume of the sample may be measured in a system with a low coefficient of variation, such as coefficient of variation values described elsewhere herein. In some instances, the volume of the sample may be measured using imaging. An image of the sample may be captured and the volume of the sample may be calculated from the image.

The sample may be delivered to a desired process. For example, the sample may be delivered for cytometry.

In another example, a typical protocol that may or may not make use of the centrifuge for nucleic acid purification may include one or more of the following steps. The system may enable DNA/RNA extraction to deliver nucleic acid template to exponential amplification reactions for detection. The process may be designed to extract nucleic acids from a variety of samples including, but not limited to whole blood, serum, viral transfer medium, human and animal tissue samples, food samples, and bacterial cultures. The process may be completely automated and may extract DNA/RNA in a consistent and quantitative manner. The steps below may be provided in varying orders or other steps may be substituted for any of the steps below:
1. Sample Lysis. Cells in the sample may be lysed using a chaotropic-salt buffer. The chaotropic-salt buffer may include one or more of the following: chaotropic salt such as, but not limited to, 3-6 M guanidine hydrochloride or guanidinium thiocyanate; sodium dodecyl sulfate (SDS) at a typical concentration of 0.1-5% v/v; ethylenediaminetetraacetic acid (EDTA) at a typical concentration of 1-5mM; lysozyme at a typical concentration of 1 mg/mL; proteinase-K at a typical concentration of 1 mg/mL; and pH may be set at 7-7.5 using a buffer such as HEPES. In some embodiments, the sample may be incubated in the buffer at typical temperature of 20-95 °C for 0-30 minutes. Isopropanol (50%-100% v/v) may be added to the mixture after lysis.
2. Surface Loading. Lysed sample may be exposed to a functionalized surface (often in the form of a packed bed of beads) such as, but not limited to, a resin-support packed in a chromatography style column, magnetic beads mixed with the sample in a batch style manner, sample pumped through a suspended resin in a fluidized-bed mode, and sample pumped through a closed channel in a tangential flow manner over the surface. The surface may be functionalized so as to bind nucleic acids (e.g. DNA, RNA, DNA/RNA hybrid) in the presence of the lysis buffer. Surface types may include silica, and ion-exchange functional groups such as diethylaminoethanol (DEAE). The lysed mixture may be exposed to the surface and nucleic acids bind.
3. Wash. The solid surface is washed with a salt solution such as 0-2 M sodium chloride and ethanol (20-80% v/v) at pH 7.0 - 7.5. The washing may be done in the same manner as loading.
4. Elution. Nucleic acids may be eluted from the surface by exposing the surface to water or buffer at pH 7-9. Elution may be performed in the same manner as loading.

Many variations of these protocols or other protocols may be employed by the system. Such protocols may be used in combination or in the place of any protocols or methods described herein.

In some embodiments, it is important to be able to recover the cells packed and concentrated by centrifugation for cytometry. In some embodiments, this may be achieved by use of the pipetting device. Liquids (typically isotonic buffered saline, a lysing agent, a mixture of a lysing agent and a fixative or a cocktail of labeled antibodies in buffer) may be dispensed into the centrifuge bucket and repeatedly aspirated and re-dispensed. The tip of the pipette may be forced into the packed cells to facilitate the process. Image analysis aids the process by objectively verifying that all the cells have been re-suspended.

### Use of the pipette and centrifuge to process samples prior to analysis

In accordance with an embodiment of the invention, the system may have pipetting, pick-and-place and centrifugal capabilities. Such capabilities may enable almost any type of sample pretreatment and complex assay procedures to be performed efficiently with very small volumes of sample.

Specifically, the system may enable separation of formed elements (red and white cells) from plasma. The system may also enable re-suspension of formed elements. In some embodiments, the system may enable concentration of white cells from fixed and hemolysed blood. The system may also enable lysis of cells to release nucleic acids. In some embodiments, purification and concentration of nucleic acids by filtration through tips packed with (typically beaded) solid phase reagents (e.g. silica) may be enabled by the system. The system may also permit elution of purified nucleic acids following solid phase extraction. Removal and collection of precipitates (for example LDL-cholesterol precipitated using polyethylene glycol) may also be enabled by the system.

In some embodiments, the system may enable affinity purification. Small molecules such as vitamin-D and serotonin may be adsorbed onto beaded (particulate) hydrophobic substrates, then eluted using organic solvents. Antigens may be provided onto antibody-coated substrates and eluted with acid. The same methods can be used to concentrate analytes found at low concentrations such as thromboxane-B2 and 6-keto-prostaglandin F1α. Antigens may be provided onto antibody or aptamer-coated substrates and then eluted.

In some embodiments, the system may enable chemical modification of analytes prior to assay. To assay serotonin (5-Hydroxytryptamine) for example, it may be required to convert the analyte to a derivative (such as an acetylated form) using a reagent (such as acetic anhydride). This may be done to produce a form of the analyte that can be recognized by an antibody.

Liquids can be moved using the pipette (vacuum aspiration and pumping). The pipette may be limited to relatively low positive and negative pressures (approximately 0.1 - 2.0 atmospheres). A centrifuge can be used to generate much higher pressures when needed to force liquids through beaded solid phase media. For example, using a rotor with a radius of 5 cm at a speed of 10,000 rpm, forces of about 5,000 x g (about 7 atmospheres) may be generated, sufficient to force liquids through resistive media such as packed beds. Any of the centrifuge designs and configurations discussed elsewhere herein or known in the art may be used.

Measurement of hematocrit with very small volumes of blood may occur. For example, inexpensive digital cameras are capable of making good images of small objects even when the contrast is poor. Making use of this capability, the system of the present invention may enable automated measurement of hematocrit with a very small volume of blood.

For example, 1 uL of blood may be drawn into a microcap glass capillary. The capillary may then be sealed with a curable adhesive and then subject to centrifugation at 10,000 x g for 5 minutes. The packed cell volume may be easily measured and the plasma meniscus (indicated by an arrow) may also be visible so hematocrit can be accurately measured. This may enable the system to not waste a relatively large volume of blood to make this measurement. In some embodiments, the camera may be used "as is" without operation with a microscope to make a larger image. In other embodiments, a microscope or other optical techniques may be used to magnify the image. In one implementation, the hematocrit was determined using the digital camera without additional optical interference, and the hematocrit measured was identical to that determined by a conventional microhematocrit laboratory method requiring many microliters of sample. In some embodiments, the length of the sample column and of that of the column of packed red cells can be measured very precisely (+/- < 0.05 mm). Given that the blood sample column may be about 10 - 20 mm, the standard deviation of hematocrit may be much better than 1 % matching that obtained by standard laboratory methods.

The system may enable measurement of erythrocyte sedimentation rate (ESR). The ability of digital cameras to measure very small distances and rates of change of distances may be exploited to measure ESR. In one example, three blood samples (15 uL) were aspirated into "reaction tips". Images were captured over one hour at two-minute intervals. Image analysis was used to measure the movement of the interface between red cells and plasma.

The precision of the measurement may be estimated by fitting the data to a polynomial function and calculating the standard deviation of the difference between the data and the fitted curve (for all samples). In the example, this was determined to be 0.038 mm or < 2 % CV when related to the distance moved over one hour. Accordingly, ESR can be measured precisely by this method. Another method for determination of ESR is to measure the maximum slope of the distance versus time relationship.

### Centrifuge

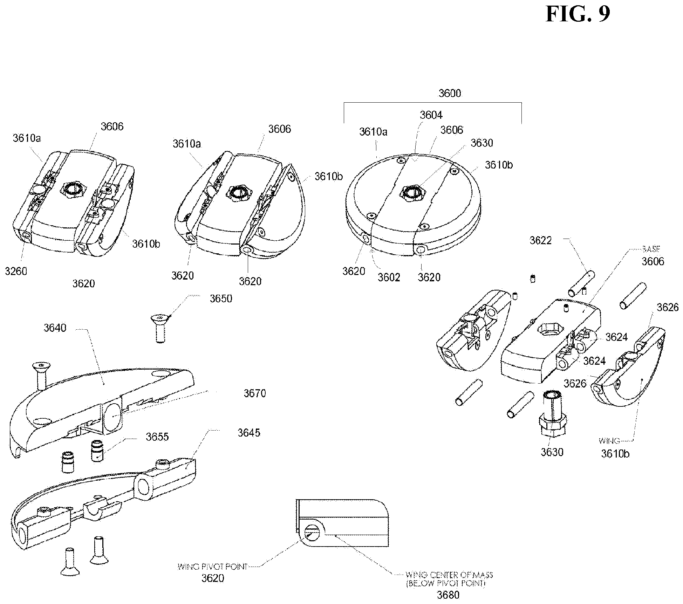

Referring now to Figures 9 to 11, still further embodiments of centrifuges will now be described. In accordance with some embodiments of the invention, a system may include one or more centrifuges. A device in the system may include one or more centrifuges therein. For example, one or more centrifuges may be provided within a device housing. A module may have one or more centrifuges. One, two, or more modules of a device may have a centrifuge therein. The centrifuge may be supported by a module support structure, or may be contained within a module housing. The centrifuge may have a form factor that is compact, flat and occupies only a small footprint. In some embodiments, the centrifuge may be miniaturized for point-of-service applications but remain capable of rotating at high rates, equal to or exceeding about 10,000 rpm, and be capable of withstanding g-forces of up to about 1200 m/s² or more.

In some embodiments, a centrifuge may be configured to accept one or more samples. A centrifuge may be used for separating and/or purifying materials of differing densities. Examples of such materials may include viruses, bacteria, cells, proteins, environmental compositions, or other compositions. A centrifuge may be used to concentrate cells and/or particles for subsequent measurement.

In some embodiments, a centrifuge may have one or more cavity that may be configured to accept a sample. The cavity may be configured to accept the sample directly within the cavity, so that the sample may contact the cavity wall. Alternatively, the cavity may be configured to accept a sample vessel that may contain the sample therein. Any description herein of cavity may be applied to any configuration that may accept and/or contain a sample or sample container. For example, cavities may include indentations within a material, bucket formats, protrusions with hollow interiors, members configured to interconnect with a sample container. Any description of cavity may also include configurations that may or may not have a concave or interior surface. Examples of sample vessels may include any of the vessel or tip designs described elsewhere herein. Sample vessels may have an interior surface and an exterior surface. A sample vessel may have at least one open end configured to accept the sample. The open end may be closeable or sealable. The sample vessel may have a closed end. The sample vessel may be a nozzle of the fluid handling apparatus, which apparatus may act as a centrifuge to spin a fluid in the nozzle, the tip or another vessel attached to such a nozzle.

In some embodiments, the centrifuge may have one or more, two or more, three or more, four or more, five or more, six or more, eight or more, 10 or more, 12 or more, 15 or more, 20 or more, 30 or more, or 50 or more cavities configured to accept a sample or sample vessel.

In some embodiments, the centrifuge may be configured to accept a small volume of sample. In some embodiments, the cavity and/or sample vessel may be configured to accept a sample volume of 1,000 µL or less, 500 µL or less, 250 µL or less, 200 µL or less, 175 µL or less, 150 µL or less, 100 µL or less, 80 µL or less, 70 µL or less, 60 µL or less, 50 µL or less, 30 µL or less, 20 µL or less, 15 µL or less, 10 µL or less, 8 µL or less, 5 µL or less, 1 µL or less, 500 nL or less, 300 nL or less, 100 nL or less, 50 nL or less, 10 nL or less, 1 nL or less, 500 pL or less, 100 pL or less 50 pL or less, 10 pL or less 5 pL or less, or 1 pL or less.

In some embodiments, the centrifuge may have a cover that may contain the sample within the centrifuge. The cover may prevent the sample for aerosolizing and/or evaporating. The centrifuge may optionally have a film, oil (e.g., mineral oil), wax, or gel that may contain the sample within the centrifuge and/or prevent it from aerosolizing and/or evaporating. The film, oil, wax, or gel may be provided as a layer over a sample that may be contained within a cavity and/or sample vessel of the centrifuge.

A centrifuge may be configured to rotate about an axis of rotation. A centrifuge may be able to spin at any number of rotations per minute. For example, a centrifuge may spin up to a rate of 100 rpm, 1,000 rpm, 2,000 rpm, 3,000 rpm, 5,000 rpm, 7,000 rpm, 10,000 rpm, 12,000 rpm, 15,000 rpm, 17,000 rpm, 20,000 rpm, 25,000 rpm, 30,000 rpm, 40,000 rpm, 50,000 rpm, 70,000 rpm, or 100,000 rpm. At some points in time, a centrifuge may remain at rest, while at other points in time, the centrifuge may rotate. A centrifuge at rest is not rotating. A centrifuge may be configured to rotate at variable rates. In some embodiments, the centrifuge may be controlled to rotate at a desirable rate. In some embodiments, the rate of change of rotation speed may be variable and/or controllable.

In some embodiments, the axis of rotation may be vertical. Alternatively, the axis of rotation may be horizontal, or may have any angle between vertical and horizontal (e.g., about 15, 30, 45, 60, or 75 degrees). In some embodiments, the axis of rotation may be in a fixed direction. Alternatively, the axis of rotation may vary during the use of a device. The axis of rotation angle may or may not vary while the centrifuge is rotating.

In some embodiments, a centrifuge may comprise a base. In some embodiments, the base comprises the centrifuge rotor. The base may have a top surface and a bottom surface. The base may be configured to rotate about the axis of rotation. The axis of rotation may be orthogonal to the top and/or bottom surface of the base. In some embodiments, the top and/or bottom surface of the base may be flat or curved. The top and bottom surface may or may not be substantially parallel to one another.

In some embodiments, the base may have a circular shape. The base may have any other shape including, but not limited to, an elliptical shape, triangular shape, quadrilateral shape, pentagonal shape, hexagonal shape, or octagonal shape.

The base may have a height and one or more lateral dimension (e.g., diameter, width, or length). The height of the base may be parallel to the axis of rotation. The lateral dimension may be perpendicular to the axis of rotation. The lateral dimension of the base may be greater than the height. The lateral dimension of the base may be 2 times or more, 3 times or more, 4 times or more, 5 times or more, 6 times or more, 8 times or more, 10 times or more, 15 times or more, or 20 times or more greater than the height.

The centrifuge may have any size. For example, the centrifuge may have a footprint of about 200 cm² or less, 150 cm² or less, 100 cm² or less, 90 cm² or less, 80 cm² or less, 70 cm² or less, 60 cm² or less, 50 cm² or less, 40 cm² or less, 30 cm² or less, 20 cm² or less, 10 cm² or less, 5 cm² or less, or 1 cm² or less. The centrifuge may have a height of about 5 cm or less, 4 cm or less, 3 cm or less, 2.5 cm or less, 2 cm or less, 1.75 cm or less, 1.5 cm or less, 1 cm or less, 0.75 cm or less, 0.5 cm or less, or 0.1 cm or less. In some embodiments, the greatest dimension of the centrifuge may be about 15 cm or less, 10 cm or less, 9 cm or less, 8 cm or less, 7 cm or less, 6 cm or less, 5 cm or less, 4 cm or less, 3 cm or less, 2 cm or less, or 1 cm or less.

The centrifuge base may be configured to accept a drive mechanism. A drive mechanism may be a motor, or any other mechanism that may enable the centrifuge to rotate about an axis of rotation. The drive mechanism may be a brushless motor, which may include a brushless motor rotor and a brushless motor stator. The brushless motor may be an induction motor. The brushless motor rotor may surround the brushless motor stator. The rotor may be configured to rotate about a stator about an axis of rotation.

The base may be connected to or may incorporate the brushless motor rotor, which may cause the base to rotate about the stator. The base may be affixed to the rotor or may be integrally formed with the rotor. The base may rotate about the stator and a plane orthogonal to the axis of rotation of the motor may be coplanar with a plane orthogonal to the axis of rotation of the base. For example, the base may have a plane orthogonal to the base axis of rotation that passes substantially between the upper and lower surface of the base. The motor may have a plane orthogonal to the motor axis of rotation that passes substantially through the center of the motor. The base planes and motor planes may be substantially coplanar. The motor plane may pass between the upper and lower surface of the base.

A brushless motor assembly may include the motor rotor and stator. The motor assembly may include the electronic components. The integration of a brushless motor into the motor rotor assembly may reduce the overall size of the centrifuge assembly. In some embodiments, the motor assembly does not extend beyond the base height. In other embodiments, the height of the motor assembly is no greater than 1.5 times the height of the base, than twice the height of the base, than 2.5 times the height of the base, than three times the height of the base, than four times the height of the base, or five times the height of the base. The motor rotor may be surrounded by the base such that the motor rotor is not exposed outside the base.

The motor assembly may affect the rotation of the centrifuge without requiring a spindle/shaft assembly. The rotor may surround the stator which may be electrically connected to a controller and/or power source.

In some embodiments, the cavity may be configured to have a first orientation when the base is at rest, and a second orientation when the base is rotating. The first orientation may be a vertical orientation and a second orientation may be a horizontal orientation. The cavity may have any orientation, where the cavity may be more than and/or equal to about 0 degrees, 5 degrees, 10 degrees, 15 degrees, 20 degrees, 25 degrees, 30 degrees, 35 degrees, 40 degrees, 45 degrees, 50 degrees, 55 degrees, 60 degrees, 65 degrees, 70 degrees, 75 degrees, 80 degrees, 85 degrees, or 90 degrees from vertical and/or the axis of rotation. In some embodiments, the first orientation may be closer to vertical than the second orientation. The first orientation may be closer to parallel to the axis of rotation than the second orientation. Alternatively, the cavity may have the same orientation regardless of whether the base is at rest or rotating. The orientation of the cavity may or may not depend on the speed at which the base is rotating.

The centrifuge may be configured to accept a sample vessel, and may be configured to have the sample vessel at a first orientation when the base is at rest, and have the sample vessel at a second orientation when the base is rotating. The first orientation may be a vertical orientation and a second orientation may be a horizontal orientation. The sample vessel may have any orientation, where the sample vessel may be more than and/or equal to about 0 degrees, 5 degrees, 10 degrees, 15 degrees, 20 degrees, 25 degrees, 30 degrees, 35 degrees, 40 degrees, 45 degrees, 50 degrees, 55 degrees, 60 degrees, 65 degrees, 70 degrees, 75 degrees, 80 degrees, 85 degrees, or 90 degrees from vertical. In some embodiments, the first orientation may be closer to vertical than the second orientation. Alternatively, the sample vessel may have the same orientation regardless of whether the base is at rest or rotating. The orientation of the vessel may or may not depend on the speed at which the base is rotating.

Figure 9 shows one non-limiting example of a centrifuge provided in accordance with an embodiment of the invention. The centrifuge may include a base 3600 having a bottom surface 3602 and/or top surface 3604. The base may comprise one, two or more wings 3610a, 3610b.

A wing may be configured to fold over an axis extending through the base. In some embodiments, the axis may form a secant through the base. An axis extending through the base may be a foldover axis, which may be formed by one or more pivot point 3620. A wing may comprise an entire portion of a base on a side of an axis. An entire portion of the base may fold over, thereby forming the wing. In some embodiments, a central portion 3606 of the base may intersect the axis of rotation while the wing does not. The central portion of the base may be closer to the axis of rotation than the wing. The central portion of the base may be configured to accept a drive mechanism 3630. The drive mechanism may be a motor, or any other mechanism that may cause the base to rotate, and may be discussed in further detail elsewhere herein. In some embodiments, a wing may have a footprint of about 2%, 5%, 10%, 15%, 20%, 25%, 30%, 35%, or 40% of the base footprint or greater.

In some embodiments, a plurality of foldover axes may be provided through the base. The foldover axes may be parallel to one another. Alternatively, some foldover axes may be orthogonal to one another or at any other angle relative to one another. A foldover axis may extend through a lower surface of the base, an upper surface of the base, or between the lower and upper surface of the base. In some embodiments, the foldover axis may extend through the base closer to the lower surface of the base, or closer to the upper surface of the base. In some embodiments, a pivot point may be at or closer to a lower surface of the base or an upper surface of the base.

One, two, three, four, five, six, or more cavities may be provided in a wing. For example, a wing may be configured to accept one, two, or more samples or sample vessels. Each wing may be capable of accepting the same number of vessels or different numbers of vessels. The wing may comprise a cavity configured to receive a sample vessel, wherein the sample vessel is oriented in a first orientation when the base is at rest and is configured to be oriented at a second orientation when the base is rotating.

In some embodiments, the wing may be configured to be at angle relative to the central portion of the base. For example, the wing may be between 90 and 180 degrees of the central portion of the base. For example, the wing may be vertically oriented when the base is at rest. The wing may be 90 degrees from the central portion of the base when vertically oriented. The wing may be horizontally oriented when the base is rotating. The wing may be 180 degrees from the central portion of the base when horizontally oriented. The wing may extend from the base to form a substantially uninterrupted surface when the base is rotating. For example, the wing may be extended to form a substantially continuous surface of the bottom and/or top surface of the base when the base is rotating. The wing may be configured to fold downward relative to the central portion of the base.

A pivot point for a wing may include one or more pivot pin 3622. A pivot pin may extend through a portion of the wing and a portion of the central portion of the base. In some embodiments, the wing and central portion of the base may have interlocking features 3624, 3626 that may prevent the wing from sliding laterally with respect to the central portion of the base.

A wing may have a center of gravity 3680 that is positioned lower than the foldover axis and/or pivot point 3620. The center of gravity of the wing may be positioned lower than the axis extending through the base when the base is at rest. The center of gravity of the wing may be positioned lower than the axis extending through the base when the base is rotating.

The wing may be formed of two or more different materials having different densities. Alternatively, the wing may be formed of a single material. In one example, the wing may have a lightweight wing cap 3640 and a heavy wing base 3645. In some embodiments, the wing cap may be formed of a material with a lower density than the wing base. For example, the wing cap may be formed of plastic while the wing base is formed of a metal, such as steel, tungsten, aluminum, copper, brass, iron, gold, silver, titanium, or any combination or alloy thereof. A heavier wing base may assist with providing a wing center of mass below a foldover axis and/or pivot point.

The wing cap and wing base may be connected through any mechanisms known in the art. For example, fasteners 3650 may be provided, or adhesives, welding, interlocking features, clamps, hook and loop fasteners, or any other mechanism may be employed. The wing may optionally include inserts 3655. The inserts may be formed of a heavier material than the wing cap. The inserts may assist with providing a wing center of mass below a foldover axis and/or pivot point.

One or more cavity 3670 may be provided within the wing cap or the wing base, or any combination thereof. In some embodiments, a cavity may be configured to accept a plurality of sample vessel configurations. The cavity may have an internal surface. At least a portion of the internal surface may contact a sample vessel. In one example, the cavity may have one or more shelf or internal surface features that may permit a first sample vessel having a first configuration to fit within the cavity and a second sample vessel having a second configuration to fit within the cavity. The first and second sample vessels having different configurations may contact different portions of the internal surface of the cavity.

The centrifuge may be configured to engage with a fluid handling device. For example, the centrifuge may be configured to connect to a pipette or other fluid handling device. In some embodiments, a water-tight seal may be formed between the centrifuge and the fluid handling device. The centrifuge may engage with the fluid handling device and be configured to receive a sample dispensed from the fluid handling device. The centrifuge may engage with the fluid handling device and be configured to receive a sample vessel from the fluid handling device. The centrifuge may engage with the fluid handling device and permit the fluid handling device to pick-up or aspirate a sample from the centrifuge. The centrifuge may engage with the fluid handling device and permit the fluid handling device to pick-up a sample vessel.

A sample vessel may be configured to engage with the fluid handling device. For example, the sample vessel may be configured to connect to a pipette or other fluid handling device. In some embodiments, a water-tight seal may be formed between the sample vessel and the fluid handling device. The sample vessel may engage with the fluid handling device and be configured to receive a sample dispensed from the fluid handling device. The sample vessel may engage with the fluid handling device and permit the fluid handling device to pick-up or aspirate a sample from the sample vessel.

A sample vessel may be configured to extend out of a centrifuge wing. In some embodiments, the centrifuge base may be configured to permit the sample vessel to extend out of the centrifuge wing when the wing is folded over, and permit the wing to pivot between a folded and extended state.

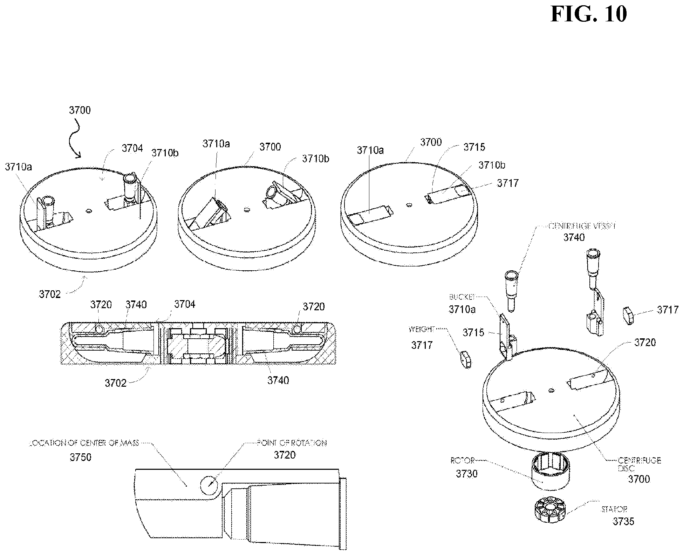

Figure 10 shows one non-limiting example of a centrifuge provided in accordance with another embodiment of the invention. The centrifuge may include a base 3700 having a bottom surface 3702 and/or top surface 3704. The base may comprise one, two or more buckets 3710a, 3710b.

A bucket may be configured to pivot about a bucket pivot axis extending through the base. In some embodiments, the axis may form a secant through the base. The bucket may be configured to pivot about a point of rotation 3720. The base may be configured to accept a drive mechanism. In one example, the drive mechanism may be a motor, such as a brushless motor. The drive mechanism may include a rotor 3730 and a stator 3735. The rotor may optionally be a brushless motor rotor, and the stator may optionally be a brushless motor stator. The drive mechanism may be any other mechanism that may cause the base to rotate, and may be discussed in further detail elsewhere herein.

In some embodiments, a plurality of axes of rotation for the buckets may be provided through the base. The axes may be parallel to one another. Alternatively, some axes may be orthogonal to one another or at any other angle relative to one another. A bucket axis of rotation may extend through a lower surface of the base, an upper surface of the base, or between the lower and upper surface of the base. In some embodiments, the bucket axis of rotation may extend through the base closer to the lower surface of the base, or closer to the upper surface of the base. In some embodiments, a point of rotation may be at or closer to a lower surface of the base or an upper surface of the base.

One, two, three, four, or more cavities may be provided in a bucket. For example, a bucket may be configured to accept one, two, or more samples or sample vessels 3740. Each bucket may be capable of accepting the same number of vessels or different numbers of vessels. The bucket may comprise a cavity configured to receive a sample vessel, wherein the sample vessel is oriented in a first orientation when the base is at rest and is configured to be oriented at a second orientation when the base is rotating.

In some embodiments, the bucket may be configured to be at angle relative to the base. For example, the bucket may be between 0 and 90 degrees of the base. For example, the bucket may be vertically oriented when the base is at rest. The bucket may be positioned upwards past the top surface of the centrifuge base when the base is at rest. At least a portion of the sample vessel may extend beyond the top surface of the base when the base is at rest. The wing may be 90 degrees from the central portion of the base when vertically oriented. The bucket may be horizontally oriented when the base is rotating. The bucket may be 0 degrees from the base when horizontally oriented. The bucket may be retracted into the base to form a substantially uninterrupted top and/or bottom surface when the base is rotating. For example, the bucket may be retracted to form a substantially continuous surface of the bottom and/or top surface of the base when the base is rotating. The bucket may be configured to pivot upwards relative the base. The bucket may be configured so that at least a portion of the bucket may pivot upwards past the top surface of the base.

A point of rotation for a bucket may include one or more pivot pin. A pivot pin may extend through the bucket and the base. In some embodiments, the bucket may be positioned between portions of the base that may prevent the bucket from sliding laterally with respect to the base.

A bucket may have a center of mass 3750 that is positioned lower than the point of rotation 3720. The center of mass of the bucket may be positioned lower than the point of rotation when the base is at rest. The center of mass of the bucket may be positioned lower than the point of rotation when the base is rotating.

The bucket may be formed of two or more different materials having different densities. Alternatively, the bucket may be formed of a single material. In one example, the bucket may have a main body 3715 and an in insert 3717. In some embodiments, the main body may be formed of a material with a lower density than the insert. For example, the main body may be formed of plastic while the insert is formed of a metal, such as tungsten, steel, aluminum, copper, brass, iron, gold, silver, titanium, or any combination or alloy thereof. A heavier insert may assist with providing a bucket center of mass below a point of rotation. The bucket materials may include a higher density material and a lower density material, wherein the higher density material is positioned lower than the point of rotation. The center of mass of the bucket may be located such that the bucket naturally swings with an open end upwards, and heavier end downwards when the centrifuge is at rest. The center of mass of the bucket may be located so that the bucket naturally retracts when the centrifuge is rotated at a certain speed. The bucket may retract when the speed is at a predetermined speed, which may include any speed, or any speed mentioned elsewhere.

One or more cavities may be provided within the bucket. In some embodiments, a cavity may be configured to accept a plurality of sample vessel configurations. The cavity may have an internal surface. At least a portion of the internal surface may contact a sample vessel. In one example, the cavity may have one or more shelf or internal surface features that may permit a first sample vessel having a first configuration to fit within the cavity and a second sample vessel having a second configuration to fit within the cavity. The first and second sample vessels having different configurations may contact different portions of the internal surface of the cavity. Although the embodiments in Figures 9-11 show centrifuge vessels with high aspect ratio in terms of height to width, it should be understood that embodiments with heights equal to or less than the width may also be used in alternative embodiments.

As previously described, the centrifuge may be configured to engage with a fluid handling device. For example, the centrifuge may be configured to connect to a pipette or other fluid handling device. The centrifuge may be configured to accept a sample dispensed by the fluid handling device or to provide a sample to be aspirated by the fluid handling device. A centrifuge may be configured to accept or provide a sample vessel.

A sample vessel may be configured to engage with the fluid handling device, as previously mentioned. For example, the sample vessel may be configured to connect to a pipette or other fluid handling device.

A sample vessel may be configured to extend out of a bucket. In some embodiments, the centrifuge base may be configured to permit the sample vessel to extend out of the bucket when the bucket is provided in a retracted state, and permit the bucket to pivot between a retracted and protruding state. The sample vessel extending out of the top surface of the centrifuge may permit easier sample or sample vessel transfer to and/or from the centrifuge. In some embodiments, the buckets may be configured to retract into the rotor, creating a compact assembly and reducing drag during operation, with additional benefits such as reduced noise and heat generation, and lower power requirements.

In some embodiments, the centrifuge base may include one or more channels, or other similar structures, such as grooves, conduits, or passageways. Any description of channels may also apply to any of the similar structures. The channels may contain one or more ball bearing. The ball bearings may slide through the channels. The channels may be open, closed, or partially open. The channels may be configured to prevent the ball bearings from falling out of the channel.

In some embodiments, ball bearings may be placed within the rotor in a sealed/closed track. This configuration is useful for dynamically balancing the centrifuge rotor, especially when centrifuging samples of different volumes at the same time. In some embodiments, the ball bearings may be external to the motor, making the overall system more robust and compact.

The channels may encircle the centrifuge base. In some embodiments, the channel may encircle the base along the perimeter of the centrifuge base. In some embodiments, the channel may be at or closer to an upper surface of the centrifuge base, or the lower surface of the centrifuge base. In some instances, the channel may be equidistant to the upper and lower surface of the centrifuge base. The ball bearings may slide along the perimeter of the centrifuge base. In some embodiments, the channel may encircle the base at some distance away from the axis rotation. The channel may form a circle with the axis of rotation at the substantial center of the circle.

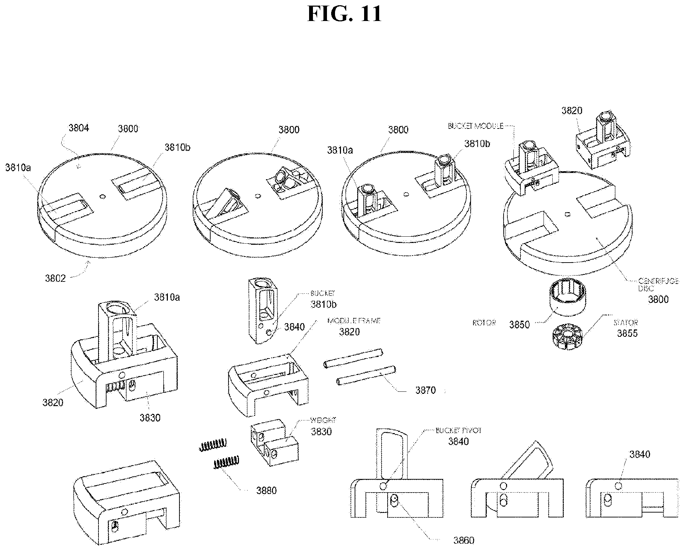

Figure 11 shows an additional, non-limiting example of a centrifuge provided in accordance with another embodiment of the invention. The centrifuge may include a base 3800 having a bottom surface 3802 and/or top surface 3804. The base may comprise one, two or more buckets 3810a, 3810b. A bucket may be connected to a module frame 3820 which may be connected to the base. Alternatively, the bucket may directly connect to the base. The bucket may also be attached to a weight 3830.

A module frame may be connected to a base. The module frame may connect to the base at a boundary that may form a continuous or substantially continuous surface with the base. A portion of the top, bottom and/or side surface of the base may form a continuous or substantially continuous surface with the module frame.

A bucket may be configured to pivot about a bucket pivot axis extending through the base and/or module frame. In some embodiments, the axis may form a secant through the base. The bucket may be configured to pivot about a bucket pivot 3840. The base may be configured to accept a drive mechanism. In one example, the drive mechanism may be a motor, such as a brushless motor. The drive mechanism may include a rotor 3850 and a stator 3855. In some embodiments, the rotor may be a brushless motor rotor, and the stator may be a brushless motor stator. The drive mechanism may be any other mechanism that may cause the base to rotate, and may be discussed in further detail elsewhere herein.

In some embodiments, a plurality of axes of rotation for the buckets may be provided through the base. The axes may be parallel to one another. Alternatively, some axes may be orthogonal to one another or at any other angle relative to one another. A bucket axis of rotation may extend through a lower surface of the base, an upper surface of the base, or between the lower and upper surface of the base. In some embodiments, the bucket axis of rotation may extend through the base closer to the lower surface of the base, or closer to the upper surface of the base. In some embodiments, a bucket pivot may be at or closer to a lower surface of the base or an upper surface of the base. A bucket pivot may be at or closer to a lower surface of the module frame or an upper surface of the module frame.

One, two, three, four, or more cavities may be provided in a bucket. For example, a bucket may be configured to accept one, two, or more samples or sample vessels. Each bucket may be capable of accepting the same number of vessels or different numbers of vessels. The bucket may comprise a cavity configured to receive a sample vessel, wherein the sample vessel is oriented in a first orientation when the base is at rest and is configured to be oriented at a second orientation when the base is rotating.

In some embodiments, the bucket may be configured to be at an angle relative to the base. For example, the bucket may be between 0 and 90 degrees of the base. For example, the bucket may be vertically oriented when the base is at rest. The bucket may be positioned upwards past the top surface of the centrifuge base when the base is at rest. At least a portion of the sample vessel may extend beyond the top surface of the base when the base is at rest. The wing may be 90 degrees from the central portion of the base when vertically oriented. The bucket may be horizontally oriented when the base is rotating. The bucket may be 0 degrees from the base when horizontally oriented. The bucket may be retracted into the base and/or frame module to form a substantially uninterrupted top and/or bottom surface when the base is rotating. For example, the bucket may be retracted to form a substantially continuous surface with the bottom and/or top surface of the base and/or frame module when the base is rotating. The bucket may be configured to pivot upwards relative the base and/or frame module. The bucket may be configured so that at least a portion of the bucket may pivot upwards past the top surface of the base and/or frame module.

The bucket may be locked in multiple positions to enable drop-off and pickup of centrifuge tubes, as well as aspiration and dispensing of liquid into and out of a centrifuge vessel when in the centrifuge bucket. One technique to accomplish this is one or more motors that drive wheels that make contact with the centrifuge rotor to finely position and/or lock the rotor. Another approach may be to use a CAM shape formed on the rotor, without additional motors or wheels. An appendage from the pipette, such as a centrifuge tip attached to a pipette nozzle, may be pressed down onto the CAM shape on the rotor. This force on the CAM surface may induce the rotor to rotate to the desired locking position. The continued application of this force may enable the rotor to be rigidly held in the desired position. Multiple such CAM shapes may be added to the rotor to enable multiple locking positions. While the rotor is held by one pipette nozzle/tip, another pipette nozzle/tip may interface with the centrifuge buckets to drop off or pick up centrifuge vessels or perform other functions, such as aspirating or dispensing from the centrifuge vessels in the centrifuge bucket. It should be understood that this CAM feature can be adapted for use with any of the embodiments mentioned in this disclosure.

A bucket pivot may include one or more pivot pin. A pivot pin may extend through the bucket and the base and/or frame module. In some embodiments, the bucket may be positioned between portions of the base and/or frame module that may prevent the bucket from sliding laterally with respect to the base.

The bucket may be attached to a weight. The weight may be configured to move when the base starts rotating, thereby causing the bucket to pivot, typically from a fully vertical position to a non-vertical position for use during centrifugation. The weight may be caused to move by a centrifugal force exerted on the weight when the base starts rotating. The weight may be configured to move away from an axis of rotation when the base starts rotating at a threshold speed. In some embodiments, the weight may move in a linear direction or path. Alternatively, the weight may move along a curved path or any other path. The bucket may be attached to a weight at a weight pivot point 3860. One or more pivot pin or protrusion may be used that may allow the bucket to rotate with respect to the weight. In some embodiments, the weight may move along a horizontal linear path, thereby causing the bucket to pivot upward or downward. The weight may move in a linear direction orthogonal to the axis of rotation of the centrifuge. This shows that bucket does not extend outward below a bottom surface of the centrifuge rotor. In some embodiment, this enables a centrifuge design with a reduced overall height when the device is in operation.

It should also be understood that the force required to move the bucket from an a resting configuration to an operational configuration is selected so that there is sufficient centrifugal force such that any sample within a centrifugation vessel is not spilled or expelled outward from the vessel as the bucket changes orientation. Often, the centrifugation vessel may be an open top vessel that is not sealed and thus cannot contain a spill from a vessel oriented in the wrong direction.

The weight may be located between portions of a module frame and/or a base. The module frame and/or base may be configured to prevent the weight from sliding out of the base. The module and/or base may restrict the path of the weight. The path of the weight may be restricted to a linear direction. One or more guide pins 3870 may be provided that may restrict the path of the weight. In some embodiments, the guide pins may pass through the frame module and/or base and the weight.

A biasing force may be provided to the weight. The biasing force may be provided by a spring 3880, elastic, pneumatic mechanism, hydraulic mechanism, or any other mechanism. The biasing force may keep the weight at a first position when the base is at rest, while the centrifugal force from the rotation of the centrifuge may cause the weight to move to a second position when the centrifuge is rotating at a threshold speed. When the centrifuge goes back to rest or the speed falls below a predetermined rotation speed, the weight may return to the first position. The bucket may have a first orientation when the weight is at the first position, and the bucket may have a second orientation when the weight is at the second position. For example, the bucket may have a vertical orientation when the weight is in the first position and the bucket may have a horizontal orientation when the weight is in the second position. The first position of the weight may be closer to the axis of rotation than the second position of the weight.

One or more cavity may be provided within the bucket. In some embodiments, a cavity may be configured to accept a plurality of sample vessel configurations. The cavity may have an internal surface. At least a portion of the internal surface may contact a sample vessel. In one example, the cavity may have one or more shelf or internal surface features that may permit a first sample vessel having a first configuration to fit within the cavity and a second sample vessel having a second configuration to fit within the cavity. The first and second sample vessels having different configurations may contact different portions of the internal surface of the cavity.

As previously described, the centrifuge may be configured to engage with a fluid handling device. For example, the centrifuge may be configured to connect to a pipette or other fluid handling device. The centrifuge may be configured to accept a sample dispensed by the fluid handling device or to provide a sample to be aspirated by the fluid handling device. A centrifuge may be configured to accept or provide a sample vessel.

A sample vessel may be configured to engage with the fluid handling device, as previously mentioned. For example, the sample vessel may be configured to connect to a pipette or other fluid handling device.

A sample vessel may be configured to extend out of a bucket. In some embodiments, the centrifuge base and/or module frame may be configured to permit the sample vessel to extend out of the bucket when the bucket is provided in a retracted state, and permit the bucket to pivot between a retracted and protruding state. The sample vessel extending out of the top surface of the centrifuge may permit easier sample or sample vessel transfer to and/or from the centrifuge.

In some embodiments, the centrifuge base may include one or more channels, or other similar structures, such as grooves, conduits, or passageways. Any description of channels may also apply to any of the similar structures. The channels may contain one or more ball bearing. The ball bearings may slide through the channels. The channels may be open, closed, or partially open. The channels may be configured to prevent the ball bearings from falling out of the channel.

The channels may encircle the centrifuge base. In some embodiments, the channel may encircle the base along the perimeter of the centrifuge base. In some embodiments, the channel may be at or closer to an upper surface of the centrifuge base, or the lower surface of the centrifuge base. In some instances, the channel may be equidistant to the upper and lower surface of the centrifuge base. The ball bearings may slide along the perimeter of the centrifuge base. In some embodiments, the channel may encircle the base at some distance away from the axis rotation. The channel may form a circle with the axis of rotation at the substantial center of the circle.

Other examples of centrifuge configurations known in the art, including various swinging bucket configurations, may be used. See, e.g., US Patent No. 7,422,554. For examples, buckets may swing down, rather than swinging up. Buckets may swing to protrude to the side rather than up or down.

The centrifuge may be enclosed within a housing or casing. In some embodiments, the centrifuge may be completely enclosed within the housing. Alternatively, the centrifuge may have one or more open sections. The housing may include a movable portion that may allow a fluid handling or other automated device to access the centrifuge. The fluid handling and/or other automated device may provide a sample, access a sample, provide a sample vessel, or access a sample vessel in a centrifuge. Such access may be granted to the top, side, and/or bottom of the centrifuge.

A sample may be dispensed and/or picked up from the cavity. The sample may be dispensed and/or picked up using a fluid handling system. The fluid handling system may be the pipette described elsewhere herein, or any other fluid handling system known in the art. The sample may be dispensed and/or picked up using a tip, having any of the configurations described elsewhere herein. The dispensing and/or aspiration of a sample may be automated.

In some embodiments, a sample vessel may be provided to or removed from a centrifuge. The sample vessel may be inserted or removed from the centrifuge using a device in an automated process. The sample vessel may extend from the surface of the centrifuge, which may simplify automated pick up and/or retrieval. A sample may already be provided within the sample vessel. Alternatively, a sample may be dispensed and/or picked up from the samples vessel. The sample may be dispensed and/or picked up from the sample vessel using the fluid handling system.

In some embodiments, a tip from the fluid handling system may be inserted at least partially into the sample vessel and/or cavity. The tip may be insertable and removable from the sample vessel and/or cavity. In some embodiments the sample vessel and the tip may be the centrifugation vessel and centrifugation tip as previously described, or have any other vessel or tip configuration. In some embodiments, a cuvette can be placed in the centrifuge rotor. This configuration may offer certain advantages over traditional tips and/or vessels. In some embodiments, the cuvettes may be patterned with one or more channels with specialized geometries such that products of the centrifugation process are automatically separated into separate compartments. One such embodiment might be a cuvette with a tapered channel ending in a compartment separated by a narrow opening. The supernatant (e.g. plasma from blood) can be forced into the compartment by centrifugal forces, while the red blood cells remain in the main channel. The cuvette may be more complicated with several channels and/or compartments. The channels may be either isolated or connected.

In some embodiments, one or more cameras may be placed in the centrifuge rotor such that it can image the contents of the centrifuge vessel while the rotor is spinning. The camera images may be analyzed and/or communicated in real time, such as by using a wireless communication method. This method may be used to track the rate of sedimentation/cell packing, such as for the ESR (erythrocyte sedimentation rate) assay, where the speed of RBC (red blood cell) settling is measured. In some embodiments, one or more cameras may be positioned outside the rotor that can image the contents of the centrifuge vessel while the rotor is spinning. This may be achieved by using a strobed illumination source that is timed with the camera and spinning rotor. Real-time imaging of the contents of a centrifuge vessel while the rotor is spinning may allow one to stop spinning the rotor after the centrifugation process has completed, saving time and possibly preventing over-packing and/or over-separation of the contents.

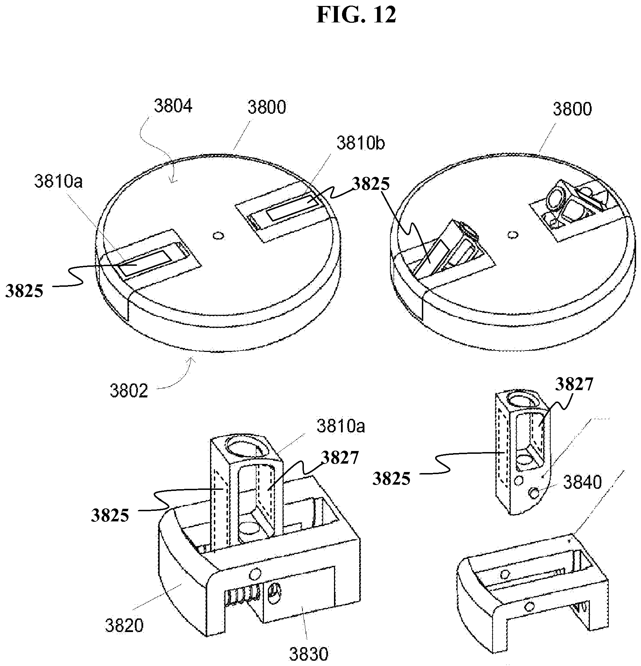

As seen in Figure 12, some embodiments may include a window or opening 3825 on the centrifugal vessel holder to allow for observation of the sample contained therein. This may involve a camera or other detector that can visualize sample in the vessel through the window or opening 3825. Optionally, some may provide window or opening 3825 to allow an illumination source to radiate onto the sample being processed. Some embodiments may include a detector such as a camera in the centrifuge, such as but not limited to being integrated into the centrifuge rotor, to image the sample therein. This can be beneficial as the movement of any blood component in the sample can be more easily visualized if the camera is in the same frame of reference as the sample. Of course, embodiments where the detector such as but not limited to a camera, is in a different frame of reference from the moving sample is not excluded. Non-visual detectors are also not excluded so long as they detect movement of blood components in the vessels.

Some embodiments may also include a corresponding window or opening 3827 that is the same size or different size from the window or opening 3825. This window or opening 3827 allows for illumination of the sample fluid within a centrifuge vessel while that vessel remains in the centrifuge. Optionally, some embodiments may use the same opening for both illumination and observation. Some embodiments have visualization through one window or opening and illumination through another set of window or openings, which may or may not oppose the first set of window or openings. For any of the embodiments herein, it should be understood that the window or opening may include an optically transparent material that covers such window or opening.

### Thermal Control

Centrifugation can sometimes result in an undesirable change in sample temperature due at least in part from heat generated from centrifuge operation. One source of heat during centrifuge operation is waste heat from the drive motor and/or drive mechanism of the centrifuge. This waste heat can be particularly problematic if several samples are processed sequentially in the same centrifuge, and the heat from each operation is aggregated over that time period which could undesirably elevate sample temperature outside an acceptable range.

To keep such waste heat or other thermal energy sources from undesirably changing sample temperature, efforts may be made to insulate, actively cool, and/or configure the system to channel undesired thermal energy away from the sample.

In one embodiment, because the motor can be integrated into the centrifuge, such integration may benefit from efforts to address thermal issues related to the motor, the centrifuge rotor, the bucket, the vessel, and/or the sample. Methods for addressing such thermal issues may include simultaneously or sequentially performing one or more of the following: cooling down, thermally isolating, and/or maintaining cooling. Some may involve active techniques to address thermal issues. Some may involve passive techniques such as but not limited to thermally isolating the centrifuge parts that connect to heat sources associated with the centrifuge.

Some embodiments may use thermally conductive materials such as but not limited to thermal tape to alter the heat transfer profile of the centrifuge. In one nonlimiting example, the tape can be configured to direct heat away from thermally sensitive areas on the centrifuge that would have a thermal impact on the sample. Thermal tape is designed to provide a preferential heat transfer path between heat-generating components and heat sinks or other cooling devices (e.g., fans, heat spreaders, etc...). Thermal tape can be a tacky pressure sensitive adhesive loaded with thermally conductive ceramic fillers that do not require a heat cure cycle to form a bond to many substrates. This could be used alone or in combination with any of the other thermal solutions described herein.

Some embodiments may use an active cooler such as but not limited to a Peltier heater / cooler to cool the sample and/or one or more of the previously mentioned centrifuge components. The active cooler can be in direct contact with the target surface being cooled. Some embodiments may attach an active heat sink or Peltier heater / cooler to the bucket or holder that houses the centrifugation vessel. Optionally, the active cooler may be proximate to but not in direct contact with a target surface. For example, an active heat sink or Peltier heater / cooler can be attached to a centrifuge housing proximate to portions of the centrifuge that hold the sample.

Some embodiments may mount structures outside of the centrifuge housing to assist in convective cooling. Some may involve adding fins or air moving structures to the centrifuge rotor and/or other moving parts of the centrifuge. Some may attach fins or air moving structures to stationary portions of the housing near the rotor. Such fins may be used to radiate away any waste heat and/or to aid in convection.

As seen in Figure 12, some embodiments may use thermally non-conductive materials to alter the heat transfer profile. In terms of efforts to insulate the sample from heat source(s), some embodiments may change some metal materials to plastic or other strong materials with low thermal conductivity. Some may isolate the sample with foam or other types of insulation to prevent undesired heat transfer. Some may have the entire centrifuge rotor made of the low thermal conductivity material. Some embodiments may only have portions of the centrifuge rotor made of the low thermal conductivity material. As seen in Figure 12, some embodiments may only replace select portions such as but not limited to the frame portion 3820 with thermally insulating material.

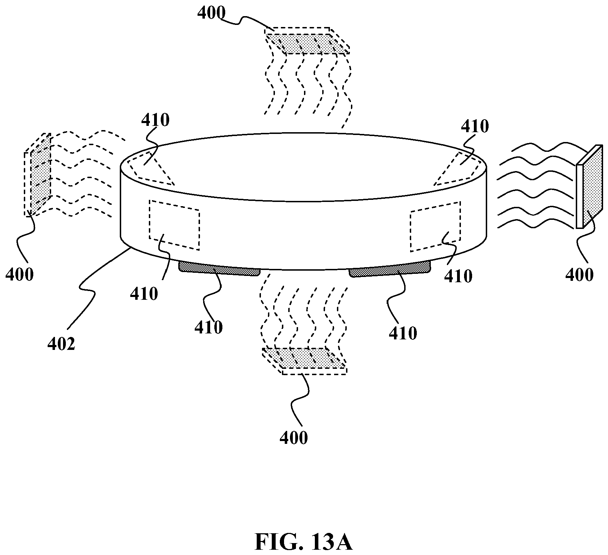

Referring now to Figure 13A, some embodiments may use one or more external cooling devices 400 such as fans or air conditioning sources to use convection of cooled or uncooled air or gas to minimize sample heating during centrifugation. As seen in Figure 13A, some embodiments may use more than one cooling device 400 at different locations and/or orientations about the centrifuge housing 402 to direct convective flow over the centrifuge.

Also seen in Figure 13A, some embodiments may have an active thermal device 410 such as but not limited to a Peltier effect heatsink attached to one or more of the components of the centrifuge system such as but not limited to the centrifuge housing 402. Figure 13A shows that the housing 402 which is stationary, may have active thermal devices 410 such as Peltier effect heatsink 410 positioned at one or more locations on the housing 402. Some embodiment may use conventional, passive heat sinks in place of or in combination with the Peltier effect heatsinks 410. By way of example and not limitation, some of the locations indicated in Figure 13A to have active thermal devices 410 may have those units replaced by or augmented by passive heat sinks.

In one embodiment, the Peltier effect heatsink may use electricity to achieve extremely low temperatures. One embodiment may wire the Peltier effect heatsink into the motor circuit. Of course, other configurations to power the heat sink are not excluded. Because the opposite side of the heat sink is heated during operation, it is desirable that the heat sink be positioned near a duct, vent, heat spreader, heat radiating fins, heat radiating pins, or other element for drawing waste heat away from the cool side of the heat sink. Some may use a thermally conducting motor mount to draw heat away from the internal components. One such embodiment may include a fan with aluminum stator vanes brazed to an aluminum motor mount. A motor may be tightly fit in the housing and pasted with "heat transfer compound" to provide a preferred thermal pathway for directing heat away from the motor. This will improve heat transfer from the motor to the cooling fins.

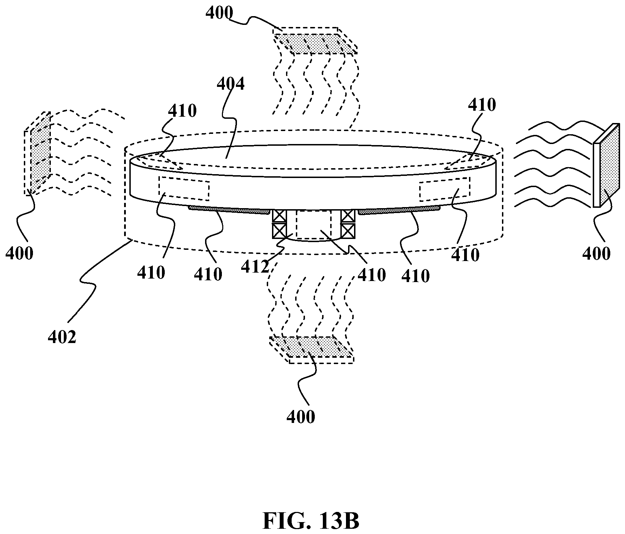

Although Figure 13A shows that thermal regulating elements may be placed on the housing or other non-moving portions of the centrifuge system, it should also understood that similar active or passive thermal device(s) can also be mounted on internal and/or moving components of the centrifuge system. By way of non-limiting example, Figure 13B shows that the motor, the centrifuge rotor 404, the bucket, the vessel, and/or surfaces in contact with the sample may also be configured to be under thermal control of device(s) 410. Figure 13B shows that active thermal devices 410 may be located on the perimeter side surfaces of the centrifuge rotor 404. Optionally, the active thermal devices 410 may be located on a top surface of the centrifuge rotor 404. Optionally, the active thermal devices 410 may be located on an underside surface of the centrifuge rotor 404. Optionally, the active thermal devices 410 may be located on a shroud, housing, or shield of the motor 412. By way of example and not limitation, some of the locations indicated in Figure 13B to have active thermal devices 410 may have those units replaced by or augmented by passive heat sinks.

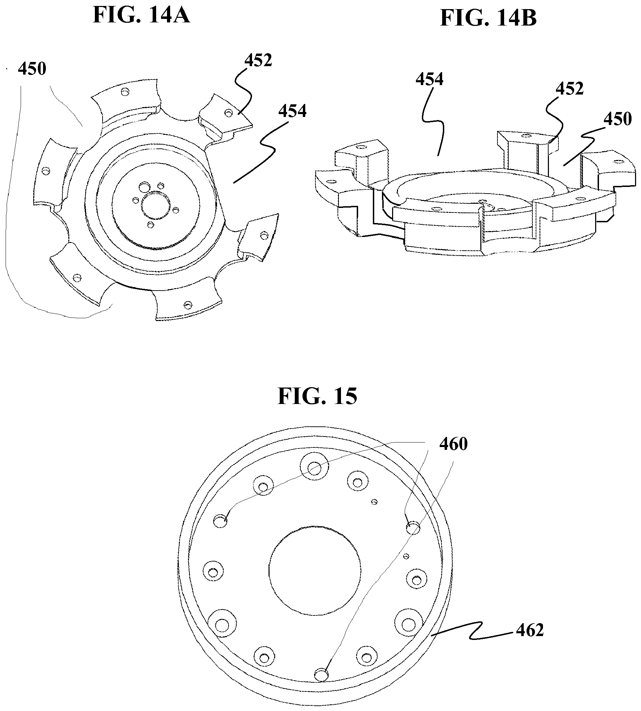

Referring now to Figures 14A-14B, some embodiments may involve venting the housing around the centrifuge rotor for improved convective air flow. This may involve putting holes, cutouts, or shaped openings in the housing and/or centrifuge rotor to allow for air flow. Vents 450 may be formed in the housing 452 that is around a portion of the centrifuge motor. The vents 450 can be sized and/or positioned to allow for greater convective cooling of the motor elements of the centrifuge. In the present non-limiting example, the larger opening 454 is sized to accommodate an encoder ring reader. It should be understood that, in addition to the vent(s), the embodiments of Figures 14A-14B may also include any of the active or passive thermal elements described in Figures 13A-13B. Based on the position information provided by various configurations described in this disclosure, some embodiments of the centrifuge can be configured to drive and/or brake the centrifuge so that that centrifuge comes to rest at a specific position designated by a user and/or a device such as but not limited to a programmable processor.

Figure 15 shows yet another embodiment wherein vents 460 may be formed in the housing 462 near the centrifuge rotor or even within the centrifuge rotor itself. The vents 460 in the present embodiment can be positioned to be below the rotating portion of the centrifuge rotor (not shown for ease of illustration). Other embodiments may have greater or fewer numbers of vents 460. Other embodiments may have vents 460 of other shapes such as but not limited to square, rectangle, ellipse, triangle, trapezoid, parallelogram, pentagon, hexagon, octagon, any other shape, or single or multiple combinations of the foregoing. Some embodiments may have vents 460 which all have the same shape. Some embodiments may have at least one of the vents 460 with a different shape than that of at least one other vent 460.

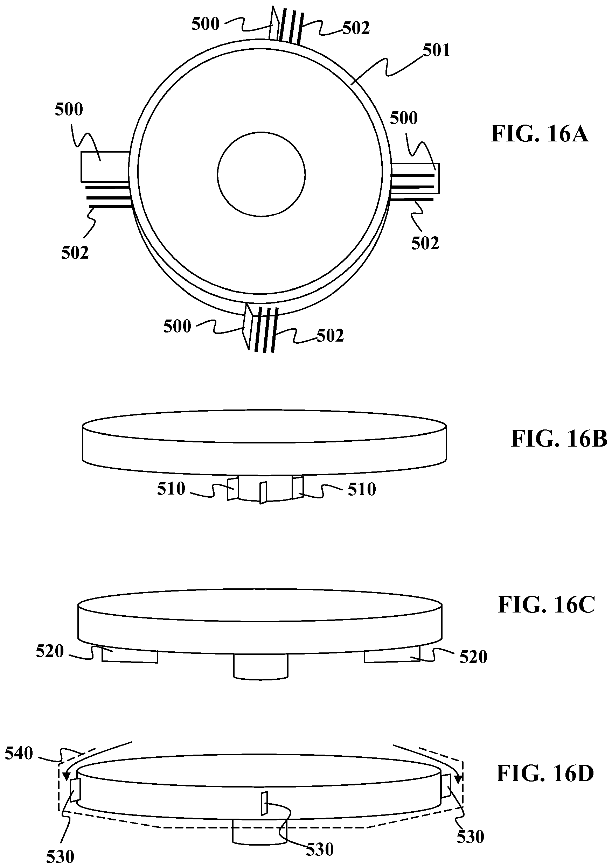

Referring now to Figures 16A-16D, still other embodiments may position thermal control elements 500 on rotating and/or non-rotating parts of the centrifuge to encourage greater convective thermal transfer. Figure 16A shows thermal control elements 500 in the shape of fins on an outer radial surface of the centrifuge housing 501. The fins may have a planar configuration. Optionally, some embodiments of the thermal control elements 500 may be a protrusion in the shape of a pin 502. Some embodiments may combine one or more of these structural features. These can be used as passive or active thermal control devices.

In some embodiments, the cross-sectional shape of a fin may be circular, crescent, tear-drop, squared, rectangular, triangular, polygonal, or any other shape. The cross-sectional shape of the fins may or may not be the same along the longitudinal length of the fins. For example, in some embodiments, the fins may have a generally cylindrical shape; in other embodiments, the fins may have a shape of pyramid (including frustum pyramid) or cones (including frustum cones). In still other embodiments, the surfaces of the fins (e.g., pin-fins) may be curved along the longitudinal length of the fins. Non-limiting examples of the surface profile of a curved fin (e.g., pin-fin) include a hyperbolic curve, a quadratic curve, a polynomial curve with an order higher than two, a circular arc, or a combination thereof. In some embodiments, the fins are solid structures, but in other embodiments, the fins may be hollow. In some embodiments, the fins may be partially hollow and partially solid. Hollow fins may allow efficient heat transfer while further reducing the amount of material to be used to make the heat sink, thereby further reducing production costs. Alternatively or additionally, a pattern formed by the fins may be broken by channels along the perimeter of the heat sink to provide additional openings to the interior of the heat sink and to increase airflow to the internal fins. The resultant channels may be of any pattern, such as general cross-cut, herringbone, or undulating. In some embodiments, the fins may be coupled together at their base (or other connection area) to form a connected network of fins, such as but not limited to a plurality of columns or rows. Some may be connected to form a percolating network of connected fins.

Figure 16B shows one embodiment with fins 510 on the inner radial portion of the centrifuge. Figure 16C shows fins 520 on an underside of the centrifuge rotor. Figure 16D shows a still further embodiment wherein fins 530 on a circumferential portion of the rotor can be optionally shaped and/or oriented for use with a shaped housing 540 to pull air into the housing to help cool components therein as the centrifuge rotor spins. Of course, some embodiments may combine one, two, three, or all of the above with other cooling elements to maximize cooling potential of the system. The embodiments of Figures 16B-16D may have the various thermal control devices coupled to either moving or stationary portions of the centrifuge.

In yet another embodiment, an internal fan-cooled electric motor (colloquially, fan-cooled motor) may be used as a self-cooling electric motor. In one embodiment, fan cooled motors feature an axial fan attached to the rotor of the motor (usually on the opposite end as the output shaft) that spins with the motor, providing increased airflow to the motor's internal and external parts which aids in cooling.

In another embodiment, water cooling may be used to cool the housing of the motor. In one nonlimiting example, a small centrifugal pump could be built off the shaft, with a reservoir of pre-cooled water circulated around the outer casing of the motor. Other active or passive liquid cooling techniques may also be used. These may be used to cool a portion of the motor housing. Some embodiments may be used to only cool the side walls of the motor housing. Some may cool the entire housing. Some embodiments may only cool end portion(s) of the housing, such as but not limited to the portions with the closest pathway to the sample.

In a still further embodiment, significantly lower winding resistance may be used to reduce the amount of heat being generated by the motor. This may involve using a motor with fewer windings to improve motor performance and in turn reduce heat output from the motor itself. Changing the number of poles and magnets can also be selected to improve motor performance. In this manner, one may select motor components to reduce thermal issues such as through the use of motors with lower heat output for the normal operating conditions of the centrifuge.

### Centrifuge Position Control

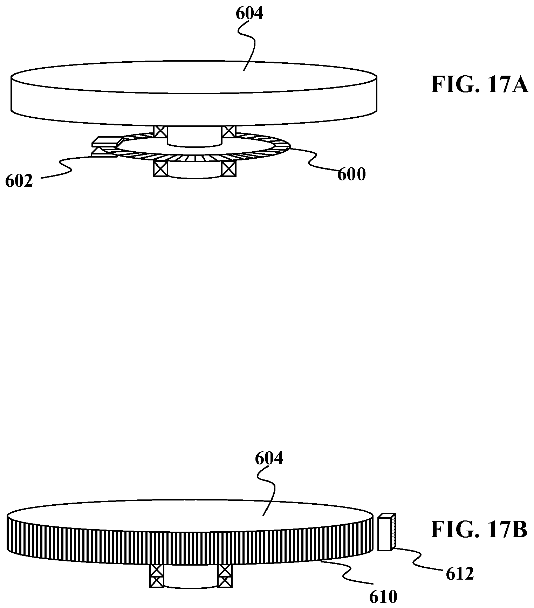

Referring now to Figures 17A-17D, improvements to the position control system of the centrifuge rotor will now be described. In one embodiment, various encoder disks or structures such as but not limited to encoder ring 600 may be used to more accurately control and/or detect the position of the centrifuge rotor 604 from which a programmable processor can calculate where the holders on the centrifuge rotor 604 are positioned. In such an embodiment, accurate information about the position of the centrifuge rotor 604 will allow a pipette or a sample handling system to accurately engage centrifuge vessels when the time comes to remove such vessels from the centrifuge without the use of a "parking" system to always position the centrifuge rotor 604 at a specific position when stopped.

Figure 17A shows one embodiment of an encoder ring 600 for use with a detector 602 for reading the encoder position. The encoder ring 600 will rotate with the centrifuge rotor 604 such that the encoder ring 600 will provide position information of the centrifuge rotor 604 and any features thereon. In one embodiment, the encoder ring 600 can have a pattern thereon and be configured for use with an optical detector 602. In one embodiment, the ring 600 may be made of glass or plastic with transparent and opaque areas. Some embodiments may use a reflective pattern on the ring 600. The encoder ring 600 may be configured to detect each distinct angle of the encoder ring. The ring 600 may be an absolute encoder or an incremental encoder.

Figure 17B shows another embodiment wherein the encoder ring 610 is integrated as part of the centrifuge rotor 604, such as along a circumferential perimeter portion of the rotor. A detector 612 is oriented for use with the integrated encoder ring 610. This can be used alone or in combination with other position detecting systems. Optionally, some embodiments may use one system for high accuracy position sensing while another system is use for high speed velocity sensing. The move of the encoder ring 610 from underneath the centrifuge rotor 604 can also reduce overall centrifuge height as the detector 612 and encoder ring no longer occupy vertical space below the centrifuge rotor 604.

In any of the embodiments herein, the centrifuge rotor 604 is hollow to allow for components to be positioned within the rotor 604 during centrifuge operation. In one embodiment, the entire centrifuge vessel is contained within the outline of the centrifuge rotor when the centrifuge is in operation.

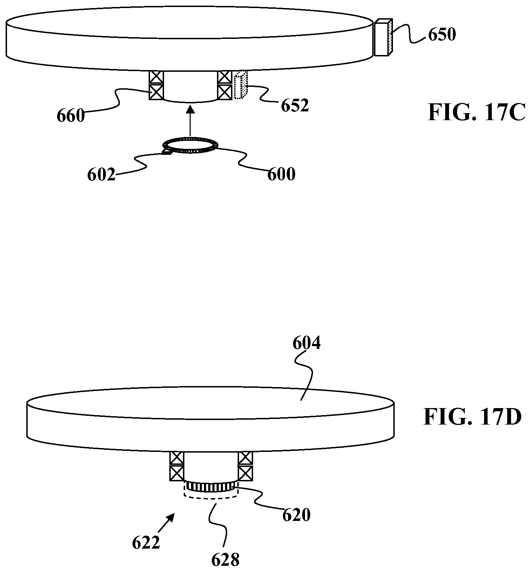

Figure 17C shows a still further embodiment wherein in making motors, the motor 622 may incorporate the encoder ring or device 620 into the motor 622. The encoder 620 may be read by a detector within the motor 622 or by a detector located outside the motor 622 to determine shaft angle position of the motor. Such an integrated encoder and motor configuration may be used in the centrifuge and in other system components such as the pipettes in the sample handling system where accurate position control is desired from a small motor form factor. By way of example and not limitation, incremental encoders may be used on induction motor type servomotors, while absolute encoders may be used in permanent magnet brushless motors. In one embodiment, a housing 628 (shown in phantom) may be used to enclose an encoder portion of the motor.

Figure 17D shows yet another embodiment wherein other encoder technologies such as but not limited to conductive and/or magnetic encoding are used in place of or along with other encoder techniques such as but not limited to optical encoders to detect rotor position. Magnetic encoder reader(s) 650 and/or 652 may be positioned at various locations to detect centrifuge rotor position. Other position detecting technologies may be used in place of or in combination with the encoder technologies described herein. In some embodiments as described herein, these capabilities can be integrated into the device.

Optionally, some embodiments may use separate sensors for speed and position. Some may use the same sensor for both. By way of example and not limitation, embodiments with more than one sensor can be configured for to have one for fine position control and one for velocity control. In this manner, higher centrifuge speeds such as but not limited to 40000rpm may be achieved without having to resort to more sophisticated sensors as each type can be optimized for its particular purpose, such as high accuracy position control at low speeds and velocity control at higher speeds. A programmable processor can be used to determine when to transition control of the centrifuge rotation based on one sensor or the other. Optionally, data from both types of sensors can be used during all time domains to provide accurate position and velocity control.

It should be understood that in systems where accurate control is not possible, a system using stops can be used to ensure that the final rest position of the centrifuge rotor is known. Other embodiments may use alignment guides, pins, cams, and/or other mechanisms to move the centrifuge rotor to a known position so that a sample handling system can accurately engage centrifuge vessels on the rotor. From knowledge of where the centrifuge has stopped, the pipette can go to the vessels. Some embodiments of the centrifuge may also have guides to direct the pipette to the desired location or to use the pipette to move the centrifuge rotor to the right position prior to engaging any sample containing vessels mounted on the centrifuge.

As seen in Figures 17A-17D, a central part of centrifuge may have a single bearing, optionally two bearings pressed 660 together to improve stability while spinning and particularly for improving bearing life. As seen in Figures 17A-17D, multiple bearings may be positioned to more evenly distribute load than if only a single bearing were used. Of course, other numbers and/or types of bearings are not excluded.

In some embodiments described herein, it should be understood that the motor may be enhanced with position and/or velocity sensing capabilities directly integrated into the motor. In one non-limiting example, some embodiments may achieve position and/or velocity sensing through the addition of hardware. In one embodiment, rotational position and/or velocity sensing can be configured for one or more rotating portions of the motor or rotating elements attached to the motor.

Possibilities for hardware integrated with the motor include but are not limited to 1) optical encoder(s) (for position (relative and/or absolute) and/or velocity sensing) and/or 2) Hall effect sensor(s) (for position (relative) and/or velocity sensing). A Hall effect sensor is a semiconductor device where the electron flow is affected by a magnetic field perpendicular to the direction of current flow. In one non-limiting example, Hall effect sensor(s) can be used to detect the position of the permanent magnet in a brushless DC electric motor.

Some embodiments may combine multiple types of detector hardware, such as but not limited to both Hall effect sensor(s) and optical encoder(s) in the same motor. Optionally, some embodiments may have multiple sensors of the same type in the motor. Of course, other types of position and/or velocity detecting hardware are not excluded from embodiments herein or from being used in combination with optical or magnetic encoders.

By way of non-limiting example, at least some embodiments of the sensors and/or encoders herein can perform at speeds of up to 12000 RPM with at least 1800 counts per revolution for position sensing. Optionally, at least some embodiments of the sensors and/or encoders herein can perform at speeds of up to 10000 RPM with at least 1600 counts per revolution for position sensing. In one embodiment, the encoder has an index that is aligned identically to the motor assembly in each centrifuge for absolute positioning. Some embodiments may use absolute encoders such as but not limited to multi-bit Gray code encoders and/or single-track Gray encoders for absolute position. Some embodiments may use sine wave encoders. Encoder technologies may include but are not limited to conductive tracks, optical tracks (including reflective versions), and magnetic encoding tracks sensed by a Hall-effect sensor or magnetoresistive sensor.

In the case of either configuration (sensor or encoder), at least some embodiments herein may be configured such that overall height (not including output shaft) is at or below 13mm, while the diameter would stay below 35mm. Optionally, some embodiments may have an overall height of about 10mm or less and diameter of 30 mm or less. In some embodiments, the hardware is designed such that integration of position and/or velocity sensing hardware does not change external motor housing dimensions relative to the same motors without sensing hardware. Optionally, one can mount the Hall sensor(s) in the stator slot(s) of the motor to minimize size change.

Optionally, some alternative embodiments may use firmware and/or software that detect position and/or velocity of the rotor without additional hardware. Examples may include monitoring back-EMF, tracking impedance, or using other techniques for sensorless motor control. One or more of the techniques described herein can be combined for use in position and/or velocity sensing.

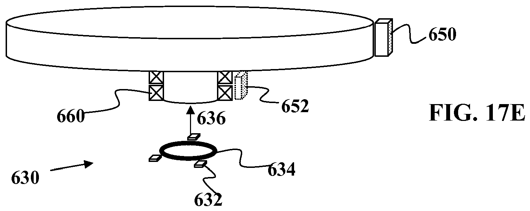

Referring now to Figure 17E, another embodiment of the centrifuge is shown with magnetic sensors such as but not limited to Hall-effect sensor assembly 630 that can be integrated directly into the motor assembly or be outside of the motor but is a part of the centrifuge assembly. Figure 17E shows an exploded view wherein the Hall-effect detectors 632 and the encoder portion 634 are shown. Arrow 636 shows that the assembly 630 can be inserted into centrifuge housing in the direction shown. By way of no limiting example, this assembly 630 is shown with three detectors 632, but it should be understood that other numbers of detectors may be used. The assembly 630 is also shown with all detectors on the same plane. It should be understood that some embodiments may have detectors on different planes, including but not limited to detectors both above and below the Hall-effect encoder portion 634. By way of nonlimiting example, the encoder portion includes a plurality of magnets and/or other magnetic field generating or interfering components that can be detected by the Hall-effect detectors 632.

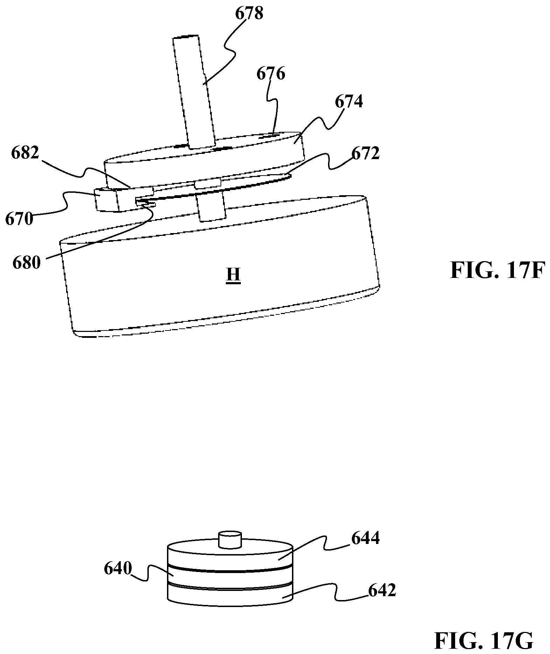

Referring now to Figure 17F, a perspective view of one embodiment of a motor with integrated position and/or velocity sensing is shown. For ease of illustration, some motor components are not shown for this embodiment to provide a clear view of the encoder components used with the motor. This encoder embodiment can be used to detect shaft position and/or rotor position. In this nonlimiting example, a detector 670 is used in combination with an encoder disc 672 and a Hall-effect encoder disc 674. The detector 670 may have a first surface directed towards detecting optical encoder information and a second surface for detecting magnetic encoder information. In one non-limiting example, the detector 670 may have a first surface 680 for detecting a first type of encoder information, such as but not limited to optical encoder information, and a second surface 682 for detecting a second type of encoder information, such as but not limited to magnetic-type encoder information. Optionally, some embodiments may have both the first type and the second type of encoder information be the same type such as but not limited to both being optical or both being magnetic. In such a configuration, the resolution may optionally be different between the at least two encoder types with one providing better low speed resolution for position control and one with better high speed resolution for velocity control. This can also be true when using different types of encoder information (such as one optical and one magnetic). Of course, embodiments using even more sensors 670 or more than two types of encoder information are not excluded.

Referring still to Figure 17F, magnetic components 676 can be mounted in the disc 674. These elements can all be configured to rotate with the motor shaft 678. The motor housing H can extend to cover all, a portion, or none of these encoder components. Optionally, some embodiments may combine at least two encoder types onto one rotating element such but not limited to an encoder disc. In one such a configuration, a single disc on the shaft may include both magnetic and optical encoder components. By way of nonlimiting example, an outer portion of the ring may have the area for the optical encoder while an inner portion has the magnetic components or vice versa. Optionally, both are on the same portions of the ring. Optionally, one type of encoder type may be on a planar surface while another component is on a lateral surface of the disc. ). Of course, embodiments using more than two types of encoder information on a single rotating component are not excluded. By way of example and not limitation, embodiments using a single detector 670 can also simplify manufacturing by having a single wire harness to attach to the detector 670, thus simplifying wire management.

Figure 17G shows yet another type of motor that can be configured to include one or more of the encoder assemblies disclosed herein. Some embodiments may use one rotor 640 and one stator 642 in the motor design. Optionally, some may use a stator 644, rotor 640, and stator 642 for increased torque. Any of these embodiments may be configured to have the encoder assemblies shown herein. Some may attach or integrate the encoder elements such as but not limited to optical encoder disc or magnetic encoder disc directly to the stator or rotor. It should be understood that the motor may adapted for use with other encoder hardware or other encoder techniques. As seen in Figure 17G, embodiments of this motor can be configured to fit inside the motor housings shown in Figures 17A-E to rotate the centrifuge body.

### Autobalancing

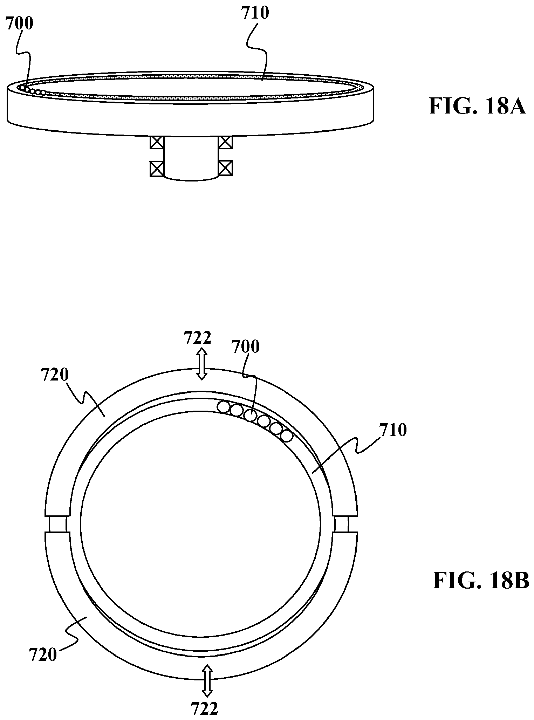

Referring now to Figure 18A, some embodiments herein may configured to use an autobalancing mechanism on the rotor to minimize rotor vibration not all of the holders contain samples. One embodiment may use autobalancing elements 700 such as but not limited to beads, spheres, or weights to autobalance the centrifuge rotor, and this could be useful to compensate for different sample volumes in different buckets. Some embodiments may load without buckets in some of the centrifuge holders. The autobalancing elements 700 may be in a channel 710 (covered or uncovered) to allow the autobalancing elements to reach a steady state position that best minimizes rotational instability of the rotor during operation. In some embodiments, instead of having a channel that is continuous along the circumferential perimeter, some embodiments may have the channel formed in certain discrete sections with autobalancing elements that will stay only in their specific, discrete section of the channel.

Optionally as seen in Figure 18B, some embodiments may include holding features 720 that only release the autobalancing elements 700 into free movement once a minimum rotational speed is reached and centrifugal or other force releases the autobalancing elements for movement. The features 720 may move as indicated by arrows 722 when sufficient speed is reached. This movement releases the autobalancing elements 700 to move to a position to balance loads on the centrifuge. In this manner, at slower speeds, the autobalancing elements 700 are not free moving. This can help minimize noise and rotational instability that may result from the autobalancing elements 700 being able to easily roll at slower speeds to non-optimal balance positions.

In one embodiment, the weight of the autobalancing elements 700 may be selected to be at least about half the total maximum weight of all sample containers and sample that could be used with the centrifuge. In another embodiment, the weight of the autobalancing elements 700 may be selected to be at least about 40% the total maximum weight of all sample containers and sample that could be used with the centrifuge. In yet another embodiment, the weight of the autobalancing elements 700 may be selected to be at least about 30% the total maximum weight of all sample containers and sample that could be used with the centrifuge. Of course, other weight amounts are not excluded.

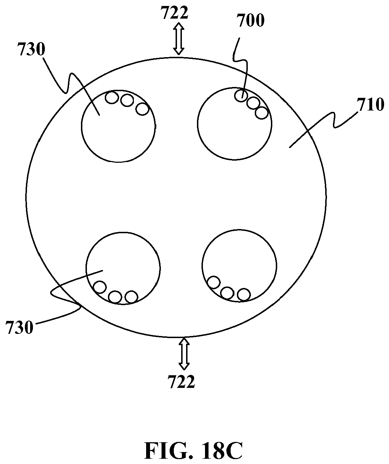

Referring now to Figure 18C, a still further embodiment may have the autobalancing elements 700 in a plurality of separate areas 730 on a rotating portion of the centrifuge. In one embodiment, the areas 730 can be connected to each other so that the autobalancing elements 700 can move from area to area. Optionally, some embodiments may have each of the areas 730 isolated from one another so that the autobalancing elements 700 do not move from one area 730 to another.

### Non-Mechanical Bearing(s)

Some systems may be configured without mechanical bearings and instead use non-mechanical air bearings 720. The air bearings may generate less heat - this can reduce the time required for centrifuge. Or it may enable longer centrifuge times without the thermal penalty that may arise from heat associated with mechanical bearings. Air bearings are available from vendors such as but not limited to, New Way Air Bearings of Aston, PA, USA. Of course, some embodiments may combine the use of both air and mechanical bearings in the same device.

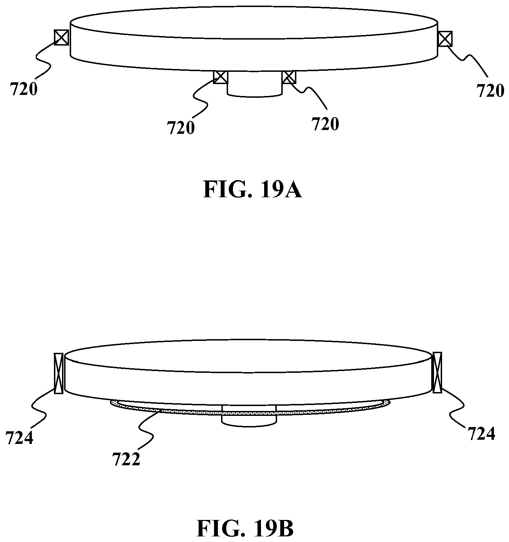

Figure 19B shows yet another embodiment wherein one of the air bearings is in a ring shape 722 while other air bearings 724 are configured to oppose side walls of the centrifuge rotor. By way of non-limiting example, the air bearings 724 may be shaped in continuous or non-continuous manner to support the centrifuge rotor.

### Fault Detection Sensor

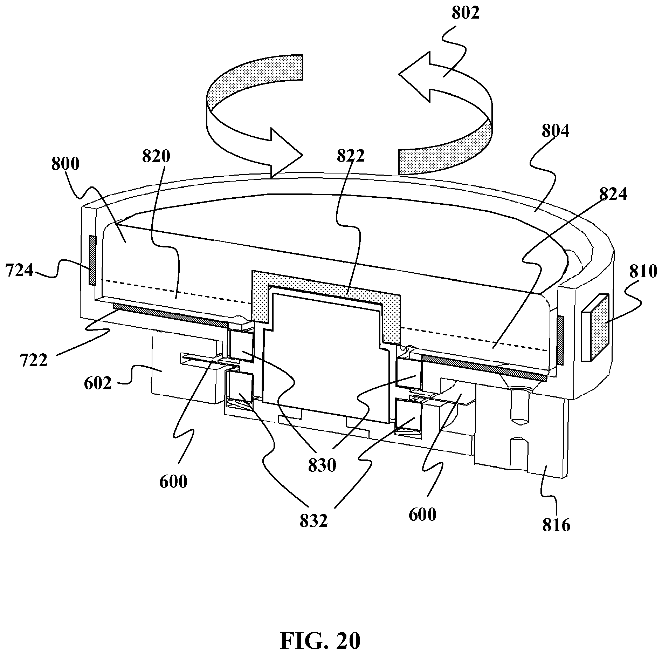

Referring now to Figure 20, yet another embodiment of a centrifuge device will now be described. Figure 20 is cross-sectional perspective view showing a centrifuge rotor 800 such as but not limited to a centrifuge disc that spins as indicated by arrows 802 within a non-rotating housing 804. The centrifuge may include a detector 810 such as but not limited to an accelerometer mounted on the centrifuge to detect undesired force changes during centrifuge operation. In one embodiment, the detector 810 is mounted to the outside of the centrifuge housing to detect if an error has occurred. The detector 810 can be used to detect early indications of unusual instability in the operation of the centrifuge. If these signs of instability are detected in terms of unusual rates of change in forces being experienced by the centrifuge, then the centrifuge may opt, such as by way of programmable processor, to slow or cease operations prior to a catastrophic device failure. Some embodiments may trigger other actions such as alarms or alerts based on detection of rate of change or forces outside a threshold range.

Figure 20 also shows other features discussed herein that are incorporated into the present embodiment. Air bearings 722 and/or 724 are incorporated for use with this embodiment of the device. Vibrational damper(s) 816 may also be used to isolate vibrations from the centrifuge from transferring to other elements outside the centrifuge housing. Figure 20 also shows that thermally insulating zones 820, 822, and/or 824 may be used to minimize heat transfer from the motor 830 to other portions of the centrifuge rotor.

It should be understood that the embodiment of Figure 20 may be configured for use with any of the rotor and/or vessel holder configurations described, including but not limited to those shown in Figures 1 to 12. Some may have a majority of the vessel holder extending above the upper plane or surface of the centrifuge rotor when the rotor is stationary. Optionally, some may have the vessel holder extending below the plane or surface of the centrifuge rotor when the rotor is stationary. For those embodiments wherein the vessel holder extends below the plane or surface of the centrifuge rotor, the housing 804 may be configured to have a shaped cutout to allow for clearance of the vessel holder and/or vessel when rotating in the downward extending position. Optionally, some embodiments may mount the rotor 800 higher and/or the entire motor higher to provide a clearance sufficient for the vessel holder and/or vessel when rotating in the downward extending position.

By way of non-limiting example, the centrifuge may have a footprint of about less than or equal to 0.1 mm², 0.5 mm², 1 mm², 3 mm², 5 mm², 7 mm², 10 mm², 15 mm², 20 mm², 25 mm², 30 mm², 40 mm², 50 mm², 60 mm², 70 mm², 80 mm², 90 mm², 100 mm², 125 mm², 150 mm², 200 mm², 250 mm², 300 mm², 500 mm², or up to 750 mm². The cytometer may have one or more dimension (e.g., width, length, height) of less than or equal to 0.05 mm, 0.1 mm, 0.5 mm, 0.7 mm, 1 mm, 2 mm, 3 mm, 4 mm, 5 mm, 6 mm, 7 mm, 8 mm, 9 mm, 10 mm, 11 mm, 12 mm, 13 mm, 15 mm, 17 mm, 20 mm, 25 mm, 30 mm, 40 mm, 50 mm, 60 mm, 70 mm, 80 mm, 100 mm, 150 mm, 200 mm, 300 mm, 500 mm, or 750 mm.

The embodiment of Figure 20 also shows, that for at least some embodiments herein, a rotor/stator configuration wherein the stator is coaxially mounted within the rotor, wherein the rotor includes the centrifuge disc as connected or integrally formed with the rotor of the motor.

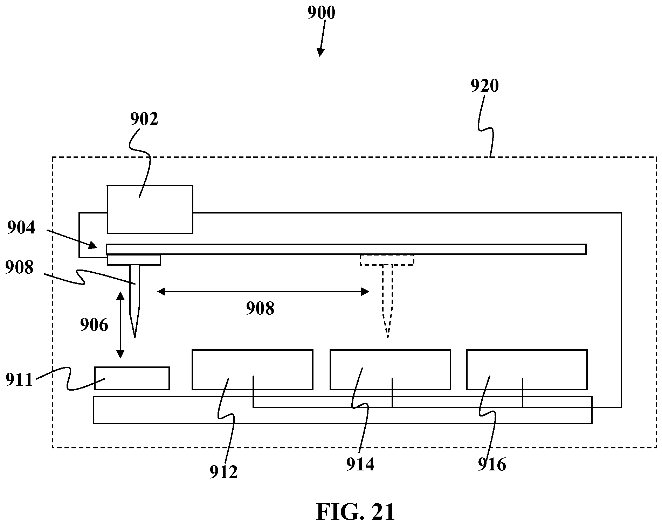

Figure 20 also shows that for at least some embodiments herein, a housing 804 shaped to enclose at least the circumferential perimeter of the centrifuge disc of rotor 800 can provide for controlled area within which the centrifuge disc can rotate. The rotational pieces of this embodiment can include the encoder wheel 600, the centrifuge disc of rotor 800, and the rotor portion of the motor. The housing 804 can act, in some embodiments, as shield to keep vibrational motion of the motor within the housing, as a damper 816 can be mounted to the housing 804 to provide isolation therein. There may be bearings 830 and 832 on which the rotational portions can be mounted to. Some embodiments may use a motor of Figures 17F or 17G to power the centrifuge of Figure 20. Optionally, a centrifuge having one or more of the features described herein can be mounted on a system of Figure 21 having an overhead sample handling system as shown or similar to that shown in Figure 21. Optionally, such a centrifuge can be mounted on a common mounted plate, common platform, or common frame as the other components 912, 914, or 916 and all serviceable by the overhead sample handling system.

It should also be understood that the embodiment of Figure 20 can also be configured to include features from the other figures herein, such as but not limited to the self-balancing features of Figures 18A-18C

### Point of Service System

Referring now to Figure 21, it should be understood that the processes described herein may be performed using automated techniques. The automated processing may be used in an integrated, automated system. In some embodiments, this may be in a single instrument having a plurality of functional components therein and surrounded by a common housing. The processing techniques and methods for sedimentation measure can be pre-set. Optionally, that may be based on protocols or procedures that may be dynamically changed as desired in the manner described in U.S. patent applications Ser. Nos. 13/355,458 (US 2012/0309636) and 13/244,947 (US 10012664).

In one non-limiting example as shown in Figure 21, an integrated instrument 900 may be provided with a programmable processor 902 which can be used to control a plurality of components of the instrument. For example, in one embodiment, the processor 902 may control a single or multiple pipette system 904 that is movable X-Y and Z directions as indicated by arrows 906 and 908. The same or different processor may also control other components 912, 914, or 916 in the instrument. In one embodiment, one of the components 912, 914, or 916 comprises a centrifuge.

As seen in Figure 21, control by the processor 902 may allow the pipette system 904 to acquire blood sample from cartridge 910 and move the sample to one of the components 912, 914, or 916. Such movement may involve dispensing the sample into a removable vessel in the cartridge 910 and then transporting the removable vessel to one of the components 912, 914, or 916. Optionally, blood sample is dispensed directly into a container already mounted on one of the components 912, 914, or 916. In one non-limiting example, one of these components 912, 914, or 916 may be a centrifuge with an imaging configuration to allow for both illumination and visualization of sample in the container. Other components 912, 914, or 916 perform other analysis, assay, or detection functions.

In one nonlimiting example, a sample vessel in a centrifuge such as one of these components 912, 914, or 916 can be moved by one or more manipulators from one of the components 912, 914, or 916 to another of the components 912, 914, or 916 (or optionally another location or device) for further processing of the sample and/or the sample vessel. Some may use the pipette system 904 to engage the sample vessel to move it from the components 912, 914, or 916 to another location in the system. This can be useful, in a non-limiting example, to move the sample vessel to an analysis station (such as but not limited to imaging) and then moving the vessel back to a centrifuge for further processing. In embodiments, this can be done using the pipette system 904 or other sample handling system in the device. Movements of vessels, tips, or the like from the cartridge 910 to one of the components 912, 914, or 916 to another location in the system (or vice versa) can also be done, in one non-limiting example, using the pipette system 904 or other sample handling system in the device. It should also be understood that in some embodiments, the pipette system 904 can be used to rotate the centrifuge rotor to the appropriate position so that vessel(s) can be loaded and/or unloaded from known positions. In such an embodiment, the pipette system 904 may use a tip, nozzle, or other pipette feature to engage the centrifuge rotor or other feature that can rotate the rotor until it is moved rotationally to a desired orientation.

All of the foregoing may be integrated within a single housing 920 and configured for bench top or small footprint floor mounting. In one example, a small footprint floor mounted system may occupy a floor area of about 4m² or less. In one example, a small footprint floor mounted system may occupy a floor area of about 3m² or less. In one example, a small footprint floor mounted system may occupy a floor area of about 2m² or less. In one example, a small footprint floor mounted system may occupy a floor area of about 1m² or less. In some embodiments, the instrument footprint may be less than or equal to about 4 m², 3 m², 2.5 m², 2 m², 1.5 m², 1 m², 0.75 m², 0.5 m², 0.3 m², 0.2 m², 0.1 m², 0.08 m², 0.05 m², 0.03 m², 100 cm², 80 cm², 70 cm², 60 cm², 50 cm², 40 cm², 30 cm², 20 cm², 15 cm², or 10 cm². Some suitable systems in a point-of-service setting are described in U.S. patent applications Ser. Nos. 13/355,458 (US 2012/0309636) and 13/244,947 (US 10012664). The present embodiments may be configured for use with any of the modules or systems described in those patent applications.

By way of non-limiting example, the centrifuge may have a footprint of about less than or equal to 0.1 mm², 0.5 mm², 1 mm², 3 mm², 5 mm², 7 mm², 10 mm², 15 mm², 20 mm², 25 mm², 30 mm², 40 mm², 50 mm², 60 mm², 70 mm², 80 mm², 90 mm², 100 mm², 125 mm², 150 mm², 200 mm², 250 mm², 300 mm², 500 mm², or up to 750 mm². The cytometer may have one or more dimension (e.g., width, length, height) of less than or equal to 0.05 mm, 0.1 mm, 0.5 mm, 0.7 mm, 1 mm, 2 mm, 3 mm, 4 mm, 5 mm, 6 mm, 7 mm, 8 mm, 9 mm, 10 mm, 11 mm, 12 mm, 13 mm, 15 mm, 17 mm, 20 mm, 25 mm, 30 mm, 40 mm, 50 mm, 60 mm, 70 mm, 80 mm, 100 mm, 150 mm, 200 mm, 300 mm, 500 mm, or 750 mm.

While the invention has been described and illustrated with reference to certain particular embodiments thereof, those skilled in the art will appreciate that various adaptations, changes, modifications, substitutions, deletions, or additions of procedures and protocols may be made without departing from the spirit and scope of the invention. For example, with any of the above embodiments, it should be understood that other techniques for plasma separation may also be used with or in place of centrifugation. For example, one embodiment may centrifuge the sample for an initial period, and then the sample may be located into a filter that then removes the formed blood components to complete separation. Although the present embodiments are described in the context of centrifugation, other accelerated separation techniques may also be adapted for use systems herein. It should also be understood that although the present embodiments are described in the context of blood samples, the techniques herein may also be configured to be applied to other samples (biological or otherwise). Any of the embodiments herein may be configured have the encoder and/or sensors described in this disclosure. Any of the embodiments herein may be configured have the position detecting devices described in this disclosure. Any of the embodiments herein may be configured have the auto-stop features described in this disclosure. Any of the embodiments herein may be configured have the thermal control feature(s) described in this disclosure.

Optionally, at least one embodiment may use a variable speed centrifuge. With feedback, such as but not limited to imaging of the position of interface(s) in the sample, the speed of the centrifuge could be varied to keep the compaction curve linear with time (until fully compacted), and the ESR data extracted from the speed profile of the centrifuge rather than the sedimentation rate curve. In such a system, one or more processors can be used to feedback control the centrifuge to have a linear compaction curve while speed profile of the centrifuge is also recorded. Depending on which interface is being tracked, the sedimentation rate data is calculated based centrifuge speed. In one non-limiting example, a higher centrifuge speed is used to keep a linear curve as the compaction nears completion.

Furthermore, those of skill in the art will recognize that any of the embodiments of the present invention can be applied to collection of sample fluid from humans, animals, or other subjects. Optionally, the volume of blood used for sedimentation testing may be 1 mL or less, 500 µL or less, 300 µL or less, 250 µL or less, 200 µL or less, 170 µL or less, 150 µL or less, 125 µL or less, 100 µL or less, 75 µL or less, 50 µL or less, 25 µL or less, 20 µL or less, 15 µL or less, 10 µL or less, 5 µL or less, 3 µL or less, 1 µL or less, 500 nL or less, 250 nL or less, 100 nL or less, 50 nL or less, 20 nL or less, 10 nL or less, 5 nL or less, or 1 nL or less.

Additionally, concentrations, amounts, and other numerical data may be presented herein in a range format. It is to be understood that such range format is used merely for convenience and brevity and should be interpreted flexibly to include not only the numerical values explicitly recited as the limits of the range, but also to include all the individual numerical values or sub-ranges encompassed within that range as if each numerical value and sub-range is explicitly recited. For example, a size range of about 1 nm to about 200 nm should be interpreted to include not only the explicitly recited limits of about 1 nm and about 200 nm, but also to include individual sizes such as 2 nm, 3 nm, 4 nm, and sub-ranges such as 10 nm to 50 nm, 20 nm to 100 nm, etc....

The publications discussed or cited herein are provided solely for their disclosure prior to the filing date of the present application. Nothing herein is to be construed as an admission that the present invention is not entitled to antedate such publication by virtue of prior invention. Further, the dates of publication provided may be different from the actual publication dates which may need to be independently confirmed. All publications mentioned herein disclose and describe the structures and/or methods in connection with which the publications are cited. The following applications are referred to: U.S. patent applications Ser. Nos. 13/355,458 (US 2012/0309636) and 13/244,947 (US 10012664); U.S. Provisional Application Ser. No. 61/673,245 (CN 105209880) entitled "High Speed, Compact Centrifuge for Use with Small Sample Volumes" filed July 18, 2012, U.S. Provisional Application Ser. No. 61/675,758 (HK 06052016) entitled "High Speed, Compact Centrifuge for Use with Small Sample Volumes" filed July 25, 2012, and U.S. Provisional Application Ser. No. 61/706,753 (KR 2015/0036618) entitled "High Speed, Compact Centrifuge for Use with Small Sample Volumes" filed September 27, 2012; U.S. Patents 8,380,541, 8,088,593; U.S. Patent Publication No. 2012/0309636; U.S. Pat. App. Ser. No. 61/676,178 (BR 2426), filed July 26, 2012; PCT/US2012/57155 (US 9619627), filed September 25, 2012; U.S. Application Serial No. 13/244,946 (US 9167627), filed September 26, 2011; U.S. Patent Application 13/244,949 (US 9619627), filed September 26, 2011; and U.S. Application Serial No. 61/673,245 (CN 105209880), filed September 26, 2011.

While the above is a complete description of the preferred embodiment of the present invention, it is possible to use various alternatives, modifications and equivalents. Therefore, the scope of the present invention should be determined not with reference to the above description but should, instead, be determined with reference to the appended claims. The appended claims are not to be interpreted as including means-plus-function limitations, unless such a limitation is explicitly recited in a given claim using the phrase "means for." It should be understood that as used in the description herein and throughout the claims that follow, the meaning of "a," "an," and "the" includes plural reference unless the context clearly dictates otherwise. Also, as used in the description herein and throughout the claims that follow, the meaning of "in" includes "in" and "on" unless the context clearly dictates otherwise. Finally, as used in the description herein and throughout the claims that follow, the meanings of "and" and "or" include both the conjunctive and disjunctive and may be used interchangeably unless the context expressly dictates otherwise. Thus, in contexts where the terms "and" or "or" are used, usage of such conjunctions do not exclude an "and/or" meaning unless the context expressly dictates otherwise.

This document contains material subject to copyright protection. For example, all figures shown herein are copyrighted material. The copyright owner (Applicant herein) has no objection to facsimile reproduction of the patent documents and disclosures, as they appear in the US Patent and Trademark Office patent file or records, but otherwise reserves all copyright rights whatsoever. The following notice shall apply: Copyright 2012-2013 Theranos, Inc.

## Claims

1. A compact high speed centrifuge for use with low volume sample containers, the centrifuge comprising:
a centrifuge rotor 800;
a motor 622 for rotating said centrifuge rotor, **characterised in that** the centrifuge further comprises:
a detector 670 integrated with the motor and configured to determine at least a rotational position of a rotating portion of the motor, wherein the detector 670 uses at least two different types of encoder information to determine said rotational position;
a centrifuge housing 804 shaped to enclose at least a circumferential perimeter of the centrifuge rotor 800;
a first air bearing 722 configured to operably support an underside surface of the centrifuge rotor 800, wherein at least a portion of the first air bearing is defined by the centrifuge housing 804; and
a second air bearing 724 configured to operably support a lateral surface of the centrifuge rotor 800, wherein at least a portion of the second air bearing is defined by the centrifuge housing 804.

2. A centrifuge as in claim 1 wherein the detector 670 uses at least an optical encoder technique and a Hall-effect technique to determine rotational position.

3. A centrifuge as in claim 1 wherein the detector 670 uses at least an optical encoder technique and a Hall-effect technique to determine at least rotational position and rotational velocity.

4. A centrifuge as in claim 1 wherein the detector 670 has a first surface 680 directed towards detecting one type of encoder information and a second surface 682 directed towards detecting another type of encoder information.

5. A centrifuge as in claim 1 wherein the first surface 680 and the second surface 682 are oriented in different directions.

6. A centrifuge as in claim 1 wherein the first surface 680 and the second surface 682 are oriented in the same direction.

7. A centrifuge as in claim 1 comprising a plurality of detectors 670 for determining rotational position.

8. A centrifuge as in claim 1 further comprising a first encoder disc 672 providing the first type of encoder information and a second encoder disc 674 providing the second type of encoder information.

9. A centrifuge as in claim 1 further comprising a first encoder disc 672 providing optical encoder information and a second encoder disc 674 providing magnetic encoder information.

10. A centrifuge as in claim 1 further comprising an encoder disc providing the first type of encoder information and the second type of encoder information.

11. A centrifuge as in claim 1 further comprising an encoder disc providing both optical encoder information and magnetic encoder information.

12. A method comprising:
providing a motor 622 having a first type of encoder 672 and a second type of encoder 674;
wherein the motor is coupled to a centrifuge rotor;
determining rotational position of a rotating portion 800 of the motor 622 using the first type of encoder 672;
determining rotational velocity of the rotating portion 800 of the motor 622 using the second type of encoder 674
supporting an underside surface of the centrifuge rotor 800 with a first air bearing 722,
wherein at least a portion of the first air bearing 722 is defined by a centrifuge housing 804 shaped to enclose at least a circumferential perimeter of the centrifuge rotor 800; and
supporting a lateral surface of the centrifuge rotor 800 with a second air bearing 724, wherein at least a portion of the second air bearing is defined by the centrifuge housing 804.

13. A method as in claim 12 wherein the first type of encoder 672 provides optical encoder information.

14. A method as in claim 12 wherein the first type of encoder 672 provides magnetic encoder information.

15. A method as in claim 12 wherein the first type of encoder 672 provides Hall-effect encoder information.

## Patentansprüche

1. Eine kompakte Hochgeschwindigkeitszentrifuge für die Verwendung mit Probenbehältern für kleine Volumina, die Zentrifuge umfassend:
Einen Zentrifugenrotor 800;
eine Motor 622 für die Rotation des Zentrifugenrotors, **gekennzeichnet dadurch, dass** die Zentrifuge ferner Folgendes umfasst:
Einen Detektor 670, der in den Motor integriert und so konfiguriert ist, dass er mindestens eine Rotationsposition eines Rotationsabschnitts des Motors bestimmen kann, wobei der Detektor 670 mindestens zwei verschiedene Typen von Encoder-Informationen nutzt, um diese Rotationsposition zu bestimmen;
ein Zentrifugengehäuse 804, das so geformt ist, dass es mindestens einen Umfang des Zentrifugenrotors 800 umfasst;
ein erstes Luftlager 722, konfiguriert, um eine Fläche an der Unterseite des Zentrifugenrotors 800 im Betrieb zu stützen, wobei mindestens ein Abschnitt des ersten Luftlagers vom Zentrifugengehäuse 804 definiert wird; und
ein zweites Luftlager 724, konfiguriert, um eine Seitenfläche des Zentrifugenrotors 800 im Betrieb zu stützen, wobei mindestens ein Abschnitt des zweiten Luftlagers vom Zentrifugengehäuse 804 definiert wird.

2. Eine Zentrifuge nach Anspruch 1, wobei der Detektor 670 mindestens eine optische Encoder-Technik und eine Hall-Technik nutzt, um die Rotationsposition zu bestimmen.

3. Eine Zentrifuge nach Anspruch 1, wobei der Detektor 670 mindestens eine optische Encoder-Technik und eine Hall-Technik nutzt, um mindestens die Rotationsposition und Rotationsgeschwindigkeit zu bestimmen.

4. Eine Zentrifuge nach Anspruch 1, wobei der Detektor 670 eine erste Fläche 680 aufweist, die auf die Erfassung eines Typs von Encoder-Information ausgerichtet ist, und eine zweite Fläche 682 aufweist, die auf die Erfassung eines weiteren Typs von Encoder-Information ausgerichtet ist.

5. Eine Zentrifuge nach Anspruch 1, wobei die erste Fläche 680 und die zweite Fläche 682 in verschiedene Richtungen ausgerichtet sind.

6. Eine Zentrifuge nach Anspruch 1, wobei die erste Fläche 680 und die zweite Fläche 682 in dieselbe Richtung ausgerichtet sind.

7. Eine Zentrifuge nach Anspruch 1, umfassend eine Vielzahl von Detektoren 670 für die Bestimmung der Rotationsposition.

8. Eine Zentrifuge nach Anspruch 1, ferner umfassend eine erste Encoder-Scheibe 672, die den ersten Typ von Encoder-Information bereitstellt, und eine zweite Encoder-Scheibe 674, die den zweiten Typ von Encoder-Information bereitstellt.

9. Eine Zentrifuge nach Anspruch 1, ferner umfassend eine erste Encoder-Scheibe 672, die eine optische Encoder-Information bereitstellt, und eine zweite Encoder-Scheibe 674, die eine magnetische Encoder-Information bereitstellt.

10. Eine Zentrifuge nach Anspruch 1, ferner umfassend eine Encoder-Scheibe, die den ersten Typ von Encoder-Information und den zweiten Typ von Encoder-Information bereitstellt.

11. Eine Zentrifuge nach Anspruch 1, ferner umfassend eine Encoder-Scheibe, die sowohl optische Encoder-Information als auch magnetische Encoder-Information bereitstellt.

12. Ein Verfahren umfassend:
Bereitstellen eines Motors 622 mit einem ersten Encoder-Typ 672 und einem zweiten Encoder-Typ 674;
wobei der Motor mit einem Zentrifugenrotor gekoppelt ist;
Bestimmen einer Rotationsposition eines Rotationsabschnitts 800 des Motors 622 unter Verwendung des ersten Encoder-Typs 672;
Bestimmen einer Rotationsgeschwindigkeit des Rotationsabschnitts 800 des Motors 622 unter Verwendung des
zweiten Encoder-Typs 674
Stützen einer Fläche an der Unterseite des Zentrifugenrotors 800 mit einem ersten Luftlager 722, wobei mindestens ein Abschnitt des ersten Luftlagers 722 durch ein Zentrifugengehäuse 804 definiert ist, das so geformt ist, dass es mindestens einen Umfang des Zentrifugenrotors 800 umfasst; und
Stützen einer Seitenfläche des Zentrifugenrotors 800 mit einem zweiten Luftlager 724, wobei mindestens ein Abschnitt des zweiten Luftlagers durch das Zentrifugengehäuse 804 definiert wird.

13. Verfahren nach Anspruch 12, wobei der erste Encoder-Typ 672 eine optische Encoder-Information bereitstellt.

14. Verfahren nach Anspruch 12, wobei der erste Encoder-Typ 672 eine magnetische Encoder-Information bereitstellt.

15. Verfahren nach Anspruch 12, wobei der erste Encoder-Typ 672 eine Hall-Encoder-Information bereitstellt.

## Revendications

1. Centrifugeuse compacte à haute vitesse destinée à être utilisée avec des récipients d'échantillon de faible volume, la centrifugeuse comprenant :
un rotor de centrifugeuse 800 ;
un moteur 622 destiné à faire tourner ledit rotor de centrifugeuse, **caractérisé en ce que** la centrifugeuse comprend en outre :
un détecteur 670 intégré au moteur et conçu pour déterminer au moins une position de rotation d'une partie rotative du moteur, dans lequel le détecteur 670 utilise au moins deux types différents d'informations de codeur pour déterminer ladite position de rotation ;
un carter de centrifugeuse 804 façonné pour renfermer au moins un périmètre circonférentiel du rotor de centrifugeuse 800 ;
un premier palier à air 722 conçu pour supporter fonctionnellement une surface inférieure du rotor de centrifugeuse 800, dans lequel au moins une partie du premier palier à air est définie par le carter de centrifugeuse 804 ; et
un second palier à air 724 conçu pour supporter fonctionnellement une surface latérale du rotor de centrifugeuse 800, dans lequel au moins une partie du second palier à air est définie par le carter de centrifugeuse 804.

2. Centrifugeuse selon la revendication 1, dans laquelle le détecteur 670 utilise au moins une technique de codeur optique et une technique à effet Hall pour déterminer la position de rotation.

3. Centrifugeuse selon la revendication 1, dans laquelle le détecteur 670 utilise au moins une technique de codeur optique et une technique à effet Hall pour déterminer au moins la position de rotation et la vitesse de rotation.

4. Centrifugeuse selon la revendication 1, dans laquelle le détecteur 670 présente une première surface 680 dirigée vers la détection d'un type d'informations de codage et une seconde surface 682 dirigée vers la détection d'un autre type d'informations de codage.

5. Centrifugeuse selon la revendication 1, dans laquelle la première surface 680 et la seconde surface 682 sont orientées dans des directions différentes.

6. Centrifugeuse selon la revendication 1, dans laquelle la première surface 680 et la seconde surface 682 sont orientées dans la même direction.

7. Centrifugeuse selon la revendication 1 comprenant une pluralité de détecteurs 670 destinés à déterminer la position de rotation.

8. Centrifugeuse selon la revendication 1 comprenant en outre un premier disque codeur 672 fournissant le premier type d'informations de codeur et un second disque codeur 674 fournissant le second type d'informations de codeur.

9. Centrifugeuse selon la revendication 1 comprenant en outre un premier disque codeur 672 fournissant des informations de codeur optique et un second disque codeur 674 fournissant des informations de codeur magnétique.

10. Centrifugeuse selon la revendication 1 comprenant en outre un disque codeur fournissant le premier type d'information de codeur et le second type d'information de codeur.

11. Centrifugeuse selon la revendication 1 comprenant en outre un disque codeur fournissant à la fois des informations de codeur optique et des informations de codeur magnétique.

12. Procédé comprenant :
la fourniture d'un moteur 622 présentant un premier type de codeur 672 et un second type de codeur 674 ;
dans lequel le moteur est couplé à un rotor de centrifugeuse ;
la détermination de la position de rotation d'une partie rotative 800 du moteur 622 à l'aide du premier type de codeur 672 ;
la détermination de la vitesse de rotation de la partie rotative 800 du moteur 622 à l'aide du second type de codeur 674
le support d'une surface inférieure du rotor de centrifugeuse 800 avec un premier palier à air 722, dans lequel au moins une partie du premier palier à air 722 est définie par un carter de centrifugeuse 804 façonné pour renfermer au moins un périmètre circonférentiel du rotor de centrifugeuse 800 ; et
le support d'une surface latérale du rotor de centrifugeuse 800 avec un second palier à air 724, dans lequel au moins une partie du second palier à air est définie par le carter de centrifugeuse 804.

13. Procédé selon la revendication 12, dans lequel le premier type de codeur 672 fournit des informations de codeur optique.

14. Procédé selon la revendication 12, dans lequel le premier type de codeur 672 fournit des informations de codeur magnétique.

15. Procédé selon la revendication 12, dans lequel le premier type de codeur 672 fournit des informations de codeur à effet Hall.
